# EUROPÄISCHE PATENTSCHRIFT

(11) **EP 3 481 887 B1**
(45) Veröffentlichungstag und Bekanntmachung des Hinweises auf die Patenterteilung: **08.07.2020**
(21) Anmeldenummer: 17737773.6
(22) Anmeldetag: 06.07.2017
(51) Int. Cl.: C08G 18/79, C08G 18/10, C08G 18/28, C09D 175/02, C09D 175/04, D06M 13/395, C08G 18/71, C08G 18/32, C08G 18/36, C08L 75/04, D06M 15/564, C08F 220/18

(54) **ZUBEREITUNGEN ALS HYDROPHOBIERUNGSMITTEL**
PREPARATION AS WATER REPELLING AGENTS
PRÉPARATIONS EN TANT QU'AGENTS D'HYDROFUGATION

(30) Priorität: 07.07.2016 DE 102016212443
(43) Veröffentlichungstag der Anmeldung: 15.05.2019
(73) Patentinhaber: Rudolf GmbH, 82538 Geretsried (DE)
(72) Erfinder: GLAS, Helmut, 82377 Penzberg (DE); ALBERT, Christine, 83052 Bruckmühl (DE); DUSCHEK, Gunther, 83671 Benediktbeuern (DE); SIELEMANN, Dirk, 82515 Wolfratshausen (DE)
(74) Vertreter: Weickmann & Weickmann PartmbB
(86) Internationale Anmeldenummer: PCT/EP2017/066994
(87) Internationale Veröffentlichungsnummer: WO 2018/007549

(56) Entgegenhaltungen:
- WO-A1-2016/000830
- US-A1- 2005 085 573

## Beschreibung

Die Erfindung betrifft Zubereitungen umfassend ein Polyurethan und/oder Polyharnstoff und ein Copolymer sowie deren Verwendung als Hydrophobierungsmittel.

Zur Hydrophobierung bzw. Oleophobierung von Textilien werden üblicherweise wässrige oder Lösungsmittel-haltige Zubereitungen mit Silikonölen, Paraffinen, Fettsäuresalzen, fettsäuremodifizierten Melaminharzen, Fluorcarbonpolymeren und anderen Additiven verwendet. Die so ausgerüsteten Textilien sind gegenüber Regen, Spritzwasser oder Feuchtigkeit geschützt.

Während Zubereitungen auf Basis von Paraffinen, Fettsäuresalzen, Fettsäuremodifizierten Melaminharzen und Siliconen lediglich einen wasserabweisenden (hydrophobierenden) Effekt bewirken, führen Zubereitungen auf Basis von Fluorcarbonpolymeren zusätzlich zu einem Schmutz- und Öl-abweisenden (oleophobierenden) Effekt. Fluorcarbonausrüstungen werden sowohl im Bekleidungs- und Heimtextilienbereich, als auch auf dem Gebiet technischer Textilien eingesetzt.

Üblicherweise basieren Zubereitungen für die Oleophobierung auf Polyurethanen oder Polyacrylaten, welche Perfluoralkylgruppen unterschiedlicher Kettenlänge enthalten, häufig in Kombination mit anderen Additiven. Geeignete Additive können z.B. wärmehärtende Harze auf Basis von Methylolverbindungen sein, die Formbeständigkeit, Waschechtheit und Steife bewirken. Des Weiteren werden als Additive auch Extender verwendet, um die wasser- und ölabweisenden Effekte der Fluorcarbonausrüstung zu verbessern und die Waschpermanenz zu erhöhen. Geeignete Extender sind z.B. fettsäuremodifizierte Melaminharze, Gemische aus Wachs und Zirkoniumsalzen oder blockierte Polyisocyanate. Die Applikation der bevorzugt wässrigen Produkte erfolgt meist über das Auszieh- und Foulardverfahren durch Sprühen, Schäumen oder Pflatschen.

Zubereitungen auf Fluorcarbonpolymerbasis sind allerdings teuer, bedingt durch deren energieaufwändige Herstellung und stehen außerdem im Verdacht, öko- und humantoxisch zu sein, so dass ihr Einsatz insbesondere im Bekleidungsbereich zunehmend kritisch gesehen wird. Momentan gehen alle Bestrebungen dahin, Zubereitungen bereitzustellen, in denen perfluorierte C₈-Verbindungen durch weniger bedenkliche C₆-basierte Produkte ersetzt sind. Die Umstellung wird zusätzlich durch die angestrebte Regulierung von perfluorierten C₈-Bausteinen durch die Europäische Chemikalienbehörde ECHA beschleunigt.

WO 2008/022985 beschreibt Fluorcarbonpolymere, die durch Copolymerisation von kurzkettigen C₆-Perfluoroalkylethylmethacrylaten, C₁₂-C₂₂-Alkyl(meth)acrylaten, Vinyl(iden)chlorid und anderen vernetzbaren Monomeren hergestellt werden.

In der öffentlichen Diskussion werden jedoch mittlerweile perfluorierte organische Verbindungen im Allgemeinen aufgrund ihrer Persistenz negativ wahrgenommen, so dass zunehmend nach alternativen fluorfreien Produkten mit vergleichbarem Eigenschaftsprofil gesucht wird.

Derzeit lassen sich mit fluorfreien Zubereitungen nur hydrophobe jedoch keine oleophoben Effekte erzielen. Wässrige Emulsionen aus Paraffinen, Metallseifen sowie Kieselsäuresalzen polyvalenter Metalle werden eingesetzt, um die textile Oberfläche undurchlässig gegenüber Regen oder Spritzwasser zu machen. Derartige Zubereitungen werden auch zur Behandlung von Papier eingesetzt, um die hydrophoben Eigenschaften zu verbessern. Aus DE 10 019 65 sind Reaktionsprodukte aus basischen Metallsalzen von höhermolekularen Fettsäuren oder Harzsäuren und niedermolekularen Di- oder Polyisocyanaten zur Hydrophobierung von Textilien bekannt.

Neben einer guten Anfangshydrophobie ist auch die Beständigkeit der Appretur gegenüber mehrfachen Wäschen ein wichtiger Punkt. Es wurden deshalb schon frühzeitig Zubereitungen entwickelt, welche die ungenügende Beständigkeit gegenüber Waschprozessen verbessern sollten. So werden in DE 10 171 33 Hydrophobiermittel beschrieben, welche durch Mischung eines Kondensationsproduktes aus Hexamethylolmelaminhexamethylether, Stearinsäure, Stearinsäurediglycerid und Triethanolamin mit Paraffin hergestellt werden. Bei den damit ausgerüsteten Flächengebilden und Fasermaterialien hat sich allerdings als nachteilig herausgestellt, dass durch die relativ hohe Aufbringungsmenge, durch den chemischen Charakter der Zubereitung und insbesondere durch die Vernetzung der fettsäuremodifizierten Methyloltriazinverbindung mit sich selbst sowie den funktionellen Gruppen des Substrats eine deutliche Verhärtung des Griffcharakters einherging. Zudem ist der Formaldehydgehalt der auf dieser Chemie basierenden Produkte oftmals kritisch, so dass die entsprechenden Produkte gekennzeichnet werden müssen. So weisen derart ausgerüstete Textilien häufig noch Formaldehydkonzentrationen auf, die über den Grenzwerten von textilen Standards, wie z.B. Ökotex, Bluesign etc., liegen.

Alternative Verfahren zur Imprägnierung von Textilien durch Auftragen von vernetzbaren Organopolysiloxanen sind ebenfalls bekannt. Die Vernetzung kann durch Kondensation von Si-H- und Si-OH-funktionellen Organopolysiloxanen mit Hilfe eines Katalysators, wie z.B. in US 4,098,701 beschrieben, erfolgen. Ebenso ist eine Vernetzung durch eine Anlagerung von Si-H-funktionellen Organopolysiloxanen an SiC-gebundene olefinische Reste möglich (vgl. z.B. US 4,154,714 und DE 33 329 97 A1). Aufgrund des reaktiven Charakters der Organopolysiloxane ist die Herstellung lagerstabiler Zubereitungen allerdings schwierig. Häufig können die Komponenten erst direkt vor der Verwendung gemischt werden, was die Handhabung in der Praxis umständlich macht.

WO 00/29663 beschreibt Zubereitungen für die permanente Faserausrüstung, die Umsetzungsprodukte von polyisocyanatfunktionellen Verbindungen mit silikonfreien und/oder silikonhaltigen Weichgriffmitteln enthalten. Sämtliche Beispiele weisen einen hydrophilen Rest auf.

Fluorfreie Hydrophobierungsmittel auf Basis von hochverzweigten Polyurethanen und Organopolysiloxanen sind in WO 2008/135208 beschrieben.

In DE 10 2013 209 170 werden Zubereitungen auf Basis von Silikonpolymeren und Wachsen bzw. Fettsäureestern zum Erzielen wasserabweisender Effekte auf textilen Materialien eingesetzt.

Im Bereich Automobil-Textilien ist der Einsatz von Organopolysiloxan-haltigen Hydrophobierungsmittel jedoch unerwünscht. Dies ist darauf zurückzuführen, dass Organopolysiloxane die Lackierbarkeit von Oberflächen stark stören und zu unerwünschten Oberflächendefekten führen können.

Aus DE 10 211 549 sind Zubereitungen bekannt, die aus einer synthetischen oder natürlichen Wachskomponente, einem hochverzweigten Polyurethan und gegebenenfalls einem blockierten Polyisocyanat bestehen. Bei den Wachsen kann es sich z.B. um Bienen-, Carnauba-, Polyethylen- oder Fischer-Tropsch-Wachs handeln.

In WO 2010/115496 werden fluorfreie Dispersionen beschrieben, die aus einem Acrylat-Copolymer und einem Paraffin bestehen und zum Hydrophobieren von Textilien eingesetzt werden. Für den Aufbau des Copolymers werden langkettige C₁₂-C₂₂-Alkyl(meth)acrylate, Styrol bzw. Methylstyrol, Vinyl(iden)chlorid und gegebenenfalls 2-Chlor-3-Hydroxypropyl(methacrylat) und/oder Glycidyl(meth)acrylat eingesetzt.

WO 2016/000830 beschreibt fluorfreie Zubereitungen, die aus einem Polyacrylat, einem Wachs und optional einem blockierten Isocyanat und/oder einem Organopolysiloxan und/oder einem Melaminharz bestehen. Die Polyacrylate basieren auf langkettigen C₉-C₄₀-Alkyl(meth)acrylaten, einem C₁-C₈-Alkyl(methacrylat) und einem Glycidyl- bzw. hydroxyfunktionellen Monomer.

In EP 1 424 433 werden Mischungen aus einer Paraffinwachsemulsion und einer Polymeremulsion zum Hydrophobieren von Vliesen und Textilien eingesetzt. Das Polymer wird dabei aus Vinylestern von verzweigten C₈-C₁₃-Carbonsäuren, C₂-C₁₂-Alkyl(meth)acrylaten und anderen ungesättigten Comonomeren aufgebaut.

JP 2000248140 beschreibt Zubereitungen auf Basis von Polyacrylaten und Paraffinwachsen, die zur Hydrophobierung von Papier eingesetzt werden.

Die Paraffine in den in DE 10 211 549, WO 2010/115496, WO 2016/000830, EP 1 424 433 und JP 2000248140 beschriebenen Zubereitungen wirken sich allerdings nachteilig aus, da sie beim Trocknen und Kondensieren auf dem textilen Substrat bei höheren Temperaturen (ab 170° C) teilweise abdampfen und zu unerwünschten Ablagerungen im Trockner führen. Des Weiteren lassen sich unfunktionalisierte Wachse nur sehr schlecht chemisch vernetzen, so dass die Waschpermanenz dieser Komponente unzureichend ist.

In den letzten Jahren haben wasserdampfdurchlässige, atmungsaktive Funktionstextilien enorm an Bedeutung gewonnen. Die Textilien sind so konzipiert, dass Regen und Wind von außen nicht eindringen können, gleichzeitig aber Schweiß in Form von Wasserdampf von innen nach außen entweichen kann. In den meisten Fällen besitzen die Funktionstextilien einen 2- bzw. 3-lagigen Aufbau. 2-lagige Laminate werden mit bereits vorgefertigten Membranen überwiegend über eine Verklebung mit einem entsprechenden Oberstoff hergestellt. Meistens wird der Kleber punktförmig appliziert, um möglichst wenig Oberfläche zu belegen. Alternativ können Laminate auch über eine Umkehrbeschichtung hergestellt werden. Dazu wird ein Releasepapier mit einem lösungsmittelhaltigen Polyurethan beschichtet. Das Textil wird dann sogleich mit dem noch nicht getrockneten Polymerfilm in Kontakt gebracht. Nach dem Trocknen und Kondensieren wird das Releasepapier abgelöst und man erhält das fertige Laminat. Häufig wird der Polymerfilm auch erst auf dem Releasepapier getrocknet und über einen zweiten Klebestrich mit dem Textil verbunden. Direktbeschichtungen mit lösungsmittelhaltigen Polyurethanen stellen eine weitere Möglichkeit dar, atmungsaktive Funktionstextilien herzustellen.

Enthalten Hydrophobierungsmittel niedermolekulare Wachsverbindungen mit einer geringen Schmelzviskosität, wie z.B. Paraffine, können diese insbesondere bei Laminaten die Atmungsaktivität deutlich verschlechtern. Dies ist darauf zurückzuführen, dass viele Wachse im geschmolzenen Zustand in die Membran migrieren. Da bei der Herstellung des Laminats, z.B. beim Verkleben, Beschichten oder Ausrüsten Temperaturen bis zu 180° C auftreten, ist eine Migration zu erwarten. Aber auch später im Gebrauch kann eine Migration beim Waschen und Trocknen bei Temperaturen >70° C erfolgen.

In DE 33 329 97 A1, WO 2008/135208 und DE 10 2013 209 170 werden Organopolysiloxane als hydrophobierende Komponenten eingesetzt. Da Organopolysiloxane oftmals eine starke Trennwirkung haben, kann es bei den oben beschriebenen Technologien zu Haftungsproblemen kommen. Dies macht sich dadurch bemerkbar, dass sich die Membran bzw. die Beschichtung vom Oberstoff ablöst. Dieses Problem wird durch häufiges Waschen noch verstärkt.

Es ist daher die Aufgabe der vorliegenden Erfindung, eine fluorfreie Zubereitung bereitzustellen, die bei Aufbringen kleiner Mengen auf ein Substrat, eine optimale Hydrophobierung bewirkt, gleichzeitig aber ein nachträgliches Verkleben zulässt und die Membranfunktion nicht beeinflusst.

Überraschenderweise konnte die Aufgabe durch die Bereitstellung einer Zubereitung gelöst werden, welche mindestens ein Umsetzungsprodukt (S) (Komponente (1)), mindestens ein Copolymer (C) (Komponente (2)), gegebenenfalls mindestens ein (blockiertes) Polyisocyanat (Komponente (3)) gegebenenfalls Lösungsmittel (Komponente (4)) sowie gegebenenfalls mindestens eine oberflächenaktive Substanz (Komponente (5)) umfasst.

Die Zubereitungen zeichnen sich durch überlegene Hydrophobiereigenschaften bei geringen Einsatzmengen aus, ohne eine nachträgliche Verklebung des Substrats negativ zu beeinflussen. Es hat sich weiterhin gezeigt, dass die Zubereitung auch nach thermischer Behandlung die Membrandurchlässigkeit des Substrats nicht negativ beeinflusst. Des Weiteren haben die erfindungsgemäßen Zubereitungen auf Substraten eine sehr gute Waschpermanenz.

Ein erster Aspekt der vorliegenden Erfindung ist daher eine Zubereitung (Z) umfassend
(1) mindestens ein Umsetzungsprodukt (S), erhältlich durch Umsetzen mindestens einer Verbindung (A) der Formel 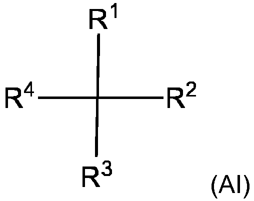 und/oder 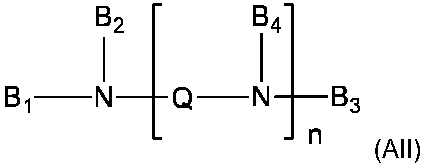
   wobei R¹ -X-Y-Z oder -Z, bevorzugt -X-Y-Z ist, mit
   X = -(CH₂)_{n"}-,
   Y = 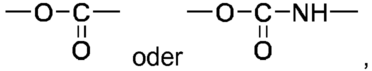
   Z = -(CH₂)ₘ-CH₃,
   R² 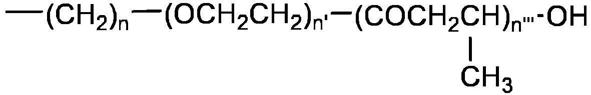 ist,
   R³ -X-Y-Z, -Z oder -Y-Z ist, mit der Maßgabe, dass im Falle der Bedeutung -Y-Z im Rest R² n durch n" ersetzt ist,
   R⁴ -X-Y-Z oder -(CH₂)_{n'}H ist,
   B¹ -V-W-Z oder -Z, bevorzugt -V-W-Z ist mit
   V = -(CH₂)_{n"}-, oder 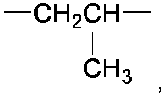
   W = 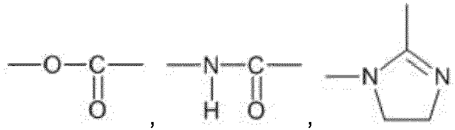 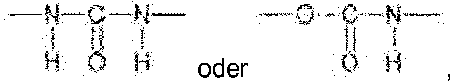
   B² = 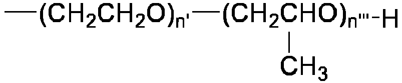 oder -(CH₂)_{n"}-NH₂ ist,
   B³ = -V-W-Z, -Z oder 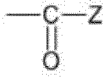 ist,
   B⁴ = -V-W-Z oder 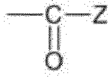 ist,
   Q = -(CH₂)_{n"}- ist und
   n, n', n", n"' und m jeweils unabhängig voneinander eine ganze Zahl ist, mit
      n = 0-2,
      n' = 0-4,
      n" = 1-4,
      n"' = 0-4 und
      m = 8-30, bevorzugt 10-26, stärker bevorzugt 10-22,
   mit mindestens einem nicht blockierten oder zumindest teilweise blockierten Di-, Tri- oder Polyisocyanat (IC), wobei der Anteil an freien Isocyanat (NCO)-Gruppen im Polyisocyanat (IC) zwischen 1,8 und 10 pro Mol liegt,
(2) mindestens ein Copolymer (C) umfassend mindestens einen Baustein der Formel 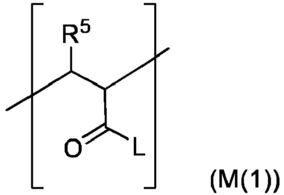 wobei L = -O-R⁶, -NH-R⁶, 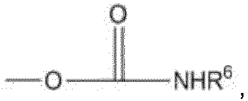 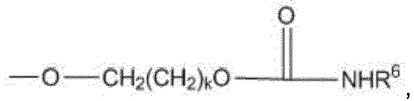 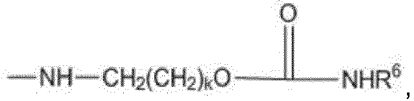 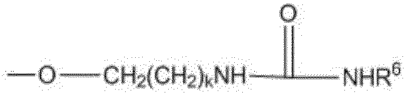 und/oder 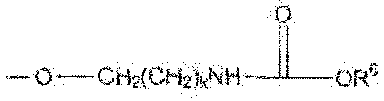 ist, 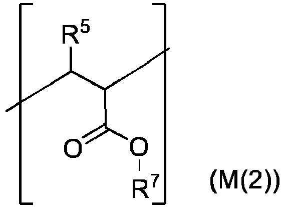 und/oder 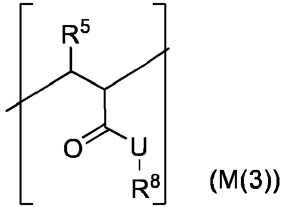 wobei
   R⁵ -H oder -CH₃ ist,
   R⁶ ein C₁₂-C₄₀-Kohlenwasserstoffrest ist,
   R⁷ ein linearer oder verzweigter aliphatischer C₁-C₈-Kohlenwasserstoffrest ist,
   U = -O- oder -NH- ist,
   R⁸ = 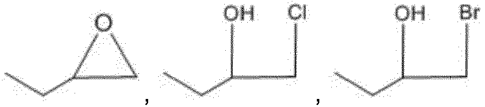 oder -CH₂-(CH₂)ₚ-OH ist,
   und k und p jeweils unabhängig voneinander eine ganze Zahl ist mit
   k = 1-5 und
   p = 0-10.
(3) gegebenenfalls mindestens ein nicht blockiertes oder zumindest teilweise blockiertes Di-, Tri- oder Polyisocyanat (IC),
(4) gegebenenfalls Wasser und/oder mindestens ein organisches Lösungsmittel und
(5) gegebenenfalls mindestens eine oberflächenaktive Substanz.

Sämtliche Prozentangaben der erfindungsgemäßen Zubereitungen beziehen sich auf die Gesamtzubereitung und sind Gewichtsprozente, sofern nicht anders angegeben.

Bevorzugt ist die erfindungsgemäße Zubereitung (Z) frei von Fluorverbindungen.

Die Komponente (1) ist bevorzugt ein hydrophobes Umsetzungsprodukt (S). Der Ausdruck *"hydrophob"* im Sinne der vorliegenden Erfindung definiert Verbindungen, die sich typischerweise bei 20 °C in Wasser im Wesentlichen nicht lösen. Gesättigte Lösungen der *"hydrophoben"* Verbindungen im Sinne der vorliegenden Erfindung enthalten bevorzugt bis zu 1 g gelöste Verbindung pro Liter Wasser (20 °C), stärker bevorzugt bis zu 0,5 g/l, noch stärker bevorzugt bis zu 0,2 g/l.

Das Umsetzungsprodukt (S) ist erhältlich durch Umsetzen mindestens einer Verbindung (A) mit mindestens einem nicht blockierten oder zumindest teilweise blockierten Di-, Tri- oder Polyisocyanat (IC).

Die Verbindung (AI) wird bevorzugt durch Umsetzung von mehrwertigen Alkoholen (a1) mit Carbonsäuren (b1) oder mit Alkylisocyanaten (b2) erhalten. Bevorzugte Beispiele für mehrwertige Alkohole (a1) sind Glycerin, Trimethylolethan, Trimethylolpropan, 1,2,4-Butantriol, Pentaerythrit oder Zucker, wie z.B. Glucose, bevorzugt Glycerin, Trimethylolethan, Trimethylolpropan, 1,2,4-Butantriol und/oder Pentaerythrit, stärker bevorzugt Glycerin.

Die Verbindung (AII) wird bevorzugt erhalten durch die Umsetzung von Alkanolamin (a2) und/oder Alkylamin (a3) mit Carbonsäure (b1) und/oder Alkylisocyanat (b2). Bevorzugte Alkanolamine (a2) sind 2-Amino-2,3-propandiol, 2-Amino-2-methyl-1,3-propandiol, Diethanolamin, Dipropanolamin, Diisopropanolamin, Ethanolpropanolamin, Triethanolamin, Triisopropanolamin, N,N,N',N'-Tetrakis(2-hydroxypropyl)ethylendiamin, Aminoethylethanolamin, Aminopropylethanolamin, Alkyltris(hydroxyethyl)propylendiamin, und Alkyldihydroxyethylamin mit bevorzugt 12-24 Kohlenstoffatomen im Alkylrest, sowie deren Ethoxylierungsprodukte. Besonders bevorzugt sind Diethanolamin, Diisopropanolamin, Triethanolamin, Triisopropanolamin, Aminoethylethanolamin und Aminopropylethanolamin, stärker bevorzugt Triethanolamin.

Beispiele für Alkylamine (a3) sind Bis(aminoethyl)amin, Bis(aminopropyl)amin und deren polymere Homologe, Aminoethylminopropylamin, Bis(aminopropyl)ethylendiamin, Tris(amino-ethyl)amin, Tris(aminopropyl)amin, Trisaminononan, Aminopropylstearylamin und Aminopropylbisstearylamin. Dabei sind Bis(aminoethyl)amin, Bis(aminopropyl)amin, Aminoethylaminopropylamin, Bis(aminopropyl)ethylendiamin und Aminopropylstearylamin bevorzugt, insbesondere Bis(aminoethyl)amin.

Die zur Herstellung der Verbindung (A) verwendeten Carbonsäuren (b1) können gesättigt, ungesättigt, unverzweigt oder verzweigt sein und bevorzugt 10-32 Kohlenstoffatome, stärker bevorzugt 12-24 Kohlenstoffatome aufweisen. Bevorzugt werden unverzweigte, gesättigte Carbonsäuren mit bevorzugt 10-32 Kohlenstoffatomen, stärker bevorzugt 12-24 Kohlenstoffatomen, wie z.B. Caprin-, Undecan-, Laurin-, Myristin-, Palmitin-, Stearin-, Arachin- und Behensäure, verwendet. Dabei sind Laurin-, Palmitin-, Stearin- und Behensäure besonders bevorzugt.

Die zur Herstellung der Verbindung (A) der Formel (AI) und (AII) verwendeten Alkylisocyanate (b2) sind bevorzugt unverzweigt, wobei der Alkylrest bevorzugt 9-31, insbesondere 11-23 Kohlenstoffatome aufweist. Ein besonders bevorzugtes Alkylisocyanat ist Stearylisocyanat.

Anstelle der unter Verwendung der mehrwertigen Alkohole (a1) oder der Alkanolamine (a2) oder der Alkylamine (a3) sowie der Carbonsäuren (b1) oder der Alkylisocyanate (b2) hergestellten Verbindung (A), können auch Verbindungen mit einem aktiven Wasserstoffatom und zwei hydrophoben Resten, wie beispielsweise Guerbet-Alkohole, Bis(dodecyl)amin und bevorzugt Bis(octadecyl)amin eingesetzt werden.

Mindestens eine Verbindung (A) wird mit mindestens einem nicht blockierten oder zumindest teilweise blockierten Di-, Tri- oder Polyisocyanaten (IC) zum hydrophoben Umsetzungsprodukt (S) umgesetzt, wobei der Anteil an freien Isocyanat (NCO)-Gruppen im Polyisocyanat (IC) zwischen 1,8 und 10 pro Mol liegt. Beispiele für nicht blockierte oder teilblockierte Isocyanate werden in DE 100 17 651, Absatz [0032] bis [0037] beschrieben.

Besonders bevorzugte, nicht blockierte Di-, Tri- oder Polyisocyanate (IC) sind beispielsweise 2,4-Toluylendiisocyanat, 2,4'-Diphenylmethandiisocyanat, 4,4'-Diphenylmethandiisocyanat (MDI), höherkettige Homologe des Diphenylmethandiisocyanates (Polymer-MDI), 4-Methyl-cyclohexan-1,3-diisocyanat, Tetramethylendiisocyanat, Tetramethylendiisocyanat-Trimere, Hexamethylendiisocyanat, Hexamethylendiisocyanat-Trimere, Isophorondiisocyanat, Isophorondiisocyanat-Trimere, 2,2,4- oder 2,4,4-Trimethyl-1,6-hexamethylendiisocyanat, Dimerdiisocyanat, Mischungen, wie z.B. Mischungen aus MDI und Polymer-MDI, sowie Derivate davon. Dimerdiisocyanat ist erhältlich von der Firma Cognis Corp., 300 Brookside Avenue, Ambler, PA 19002, USA, unter der Bezeichnung DDI 1410.

Derivate der Isocyanate (IC) umfassen z.B. cyclisierte Oligo- oder Polyisocyanate. Die Herstellung cyclisierter Oligo- oder Polyisocyanate kann nach den bekannten Methoden der Cyclisierung gemäß W. Siefken (Liebigs Annalen der Chemie 562, 1949, Seiten 75-136) erfolgen, wobei die Oligo- oder Polyisocyanate offenkettig oder cyclisch vorliegen können. Derartige Derivate können aus den oben genannten Di-, Tri- und Polyisocyanaten durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminoxadiazindion-Strukturen hergestellt werden.

Es ist auch möglich, Teilmengen der Isocyanatgruppen mit Polyalkoxymonoalkylethern unter Zuhilfenahme entsprechender Katalysatorsysteme zu Urethanen zu derivatisieren, um die Emulgierbarkeit der Komponente (1) in Wasser zu verbessern. Es können hierbei Polyethylenglykolmonomethylether mit bevorzugt 4-20 Ethylenoxideinheiten, optional mit zusätzlichen 2-6 Propylenoxydeinheiten Verwendung finden. Als Katalysatoren können die dem Fachmann bekannten Systeme auf Basis tertiärer Amine und/oder zinnorganischer Verbindungen, wie beispielsweise Dibutylzinndilaurat, Dioctylzinndilaurat oder -diacetat verwendet werden.

Bevorzugte Derivate sind Hexamethylendiisocyanat-Trimere, Diphenylmethandiisocyanat-Trimere, Urethane aus 2,4-Toluylendiisocyanat mit freien NCO-Gruppen, und mit Polyalkoxymonoalkylether modifiziertes Di-, Tri- oder Polyisocyanat (IC), insbesondere mit Polyethylenoxidmonoalkylether modifiziertes Di-, Tri- oder Polyisocyanat.

Alternativ zu den mittels Polyalkoxymonoalkylethern modifizierten Isocyanaten können tertiäre Alkanolamine als Zusatzstoffe Verwendung finden, um die kationische Ladung der Umsetzungsprodukte (S) und damit die selbstemulgierenden Eigenschaften ohne Beeinträchtigung der Gesamteigenschaften zu verbessern. Insbesondere geeignet ist hierbei Dimethylaminoethanol.

Das Isocyanat (IC) kann ferner teilweise oder vollständig blockiert sein (siehe beispielsweise DE 100 17 651, Absatz [0042]). Bevorzugte Blockierungsmittel sind Caprolactam, Natriumbisulfit, Methylethylketoxim, 3,5-Dimethylpyrazol N-tert.-Butylbenzylamin, insbesondere Caprolactam.

Die Blockierung erfolgt durch Umsetzung von Di-, Tri- oder Polyisocyanat (IC) mit dem Blockierungsmittel in der Schmelze oder in einem gegenüber Isocyanaten inerten organischen Lösemittel (LM), vorzugsweise unter einer Schutzgasatmosphäre und in Gegenwart eines geeigneten Katalysators, wie beispielsweise in EP 0 159 117 B1 oder DE 44 41 418 A1 beschrieben. Das molare Verhältnis der freien NCO-Gruppen im Isocyanat (IC) zu den Isocyanat-reaktiven Gruppen des Blockierungsmittels liegt vorzugsweise in einem stöchiometrischen Überschuss, z.B. >1:1 bis 2:1, stärker bevorzugt bis 3:1. Als geeignete, inerte organische Lösemittel (LM) werden bevorzugt wasserfreie Ester, wie beispielsweise Ethylacetat, n-Propylacetat, i-Propylacetat, n-Butylacetat, i-Butylacetat oder Amylacetat verwendet.

Zur Herstellung des Umsetzungsprodukts (S) wird das molare Verhältnis von freien Isocyanat (NCO)-Gruppen im Polyisocyanat (IC) zu Isocyanat-reaktiven Gruppen, insbesondere Hydroxygruppen und/oder primäre Aminogruppen, in Verbindung (A) auf bevorzugt 1:1 bis 1:1,3, bevorzugt 1 bis 1,1 eingestellt.

Die Komponente (1) macht bevorzugt 10-90 Gew.-%, bevorzugt 20-80 Gew.-%, stärker bevorzugt 25-65 Gew.-% oder 1-30 Gew.-%, bezogen auf die Gesamtzubereitung (Z) aus.

Bei der Komponente (2) handelt es sich um mindestens ein Copolymer (C), das mindestens einen Baustein der Formel 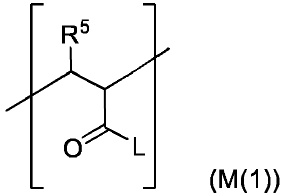 umfasst,
wobei
L = -O-R⁶, -NH-R⁶, 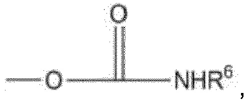 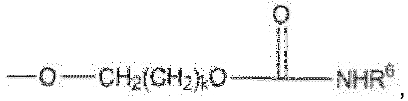 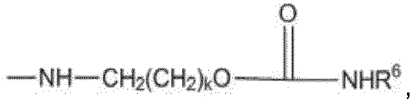 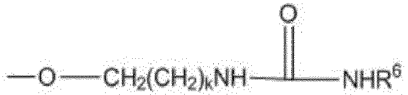 und/oder 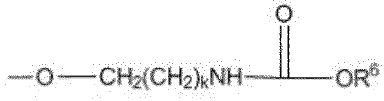 ist, 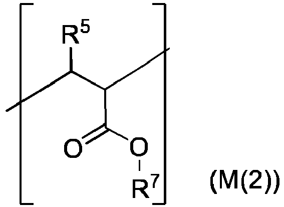 und/oder 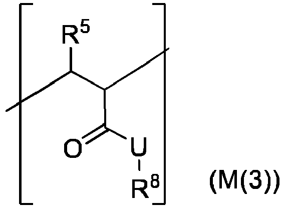 wobei
R⁵ -H oder -CH₃ ist,
R⁶ ein C₁₂-C₄₀-Kohlenwasserstoffrest ist,
R⁷ ein linearer oder verzweigter aliphatischer C₁-C₈-Kohlenwasserstoffrest ist,
U = -O- oder -NH- ist,
R⁸ = 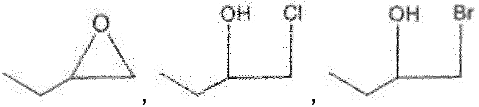 oder -CH₂-(CH₂)ₚ-OH ist,
und k und p jeweils unabhängig voneinander eine ganze Zahl ist mit
k = 1-5 und
p = 0-10.

Die Bausteine werden durch Copolymerisation der entsprechenden Monomere 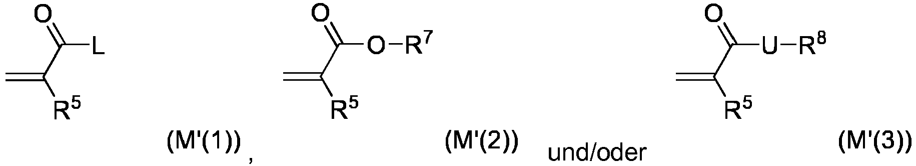 erhalten, wobei R⁵, R⁷, R⁸, und L wie für M(1), M(2) und M(3) definiert sind.

Monomere M'(1), die durch Polymerisation zu einem Baustein M(1) führen, sind bevorzugt Alkyl(meth)acrylat, Alkyl(meth)acrylamid oder Alkylcarbamat(meth)acrylat, wobei der Alkylrest ein C₁₂-C₄₀-Kohlenwasserstoffrest (R⁶) ist. Besonders bevorzugt sind Alkyl(meth)acrylate oder Alkylcarbamat(meth)acrylate. Der C₁₂-C₄₀-Kohlenwasserstoffrest R⁶ kann verzweigt oder unverzweigt, gesättigt oder ungesättigt sein und umfasst jeweils 12-40 Kohlenstoffatome. Bevorzugte Kohlenwasserstoffreste R⁶ sind ausgewählt aus unverzweigten oder verzweigten Dodecyl-, Tridecyl-, Tetradecyl-, Pentadecyl-, Hexadecyl-, Heptadecyl-, Octadecyl-, Nonadecyl-, Eicosyl-, Heneicosyl-, Docosyl-, Tricosyl-, Tetracosyl-, Pentacosyl-, Hexacosyl-, Heptacosyl-, Octacosyl-, Nonacosyl- und Triacosyl-Resten. Besonders bevorzugt ist R⁶ ein unverzweigter Dodecyl- , Tetradecyl-, Hexadecyl-, Octadecyl- und Docosylrest. Besonders bevorzugt wird der Baustein M(1) durch Polymerisation von Alkyl(meth)acrylat mit einem unverzweigten Dodecyl-, Tetradecyl-, Hexadecyl-, Octadecyl-, Cetyl- oder Docosylrest als Alkylrest erhalten.

Das Monomer M'(1) kann auch ein Alkylcarbamat(meth)acrylat sein, welches aus der Umsetzung eines Hydroxylalkyl(meth)acrylats mit einem Alkylisocyanat erhalten wird, wobei der Alkylrest wie oben definiert ist. Erhältlich sind Alkylcarbamat(meth)acrylate auch durch Reaktion von 3-Isocyanatoethyl(meth)acrylat mit entsprechenden Fettalkoholen oder Fettaminen. Als Ausgangsrohstoff bei der Synthese von Alkylcarbamatmonomeren dienen besonders bevorzugt 2-Hydroxyethylmethacrylat oder 2-Hydroxyethylacrylat, welches mit dem Alkylisocyanat umgesetzt wird. Die Synthese kann sowohl in Substanz als auch im Lösungsmittel bei Temperaturen zwischen 40-90 °C durchgeführt werden. Als Katalysatoren können die dem Fachmann bekannten Systeme auf Basis tertiärer Amine und/oder zinnorganischer Verbindungen, wie beispielsweise Dibutylzinndilaurat, Dioctylzinndilaurat oder -diacetat verwendet werden. Die Umsetzung kann titrimetrisch oder mit Hilfe von IR-Spektroskopie überwacht werden.

In einer bevorzugten Ausführungsform umfasst die Komponente (2) 30-90 Mol-%, bevorzugt 40-85 Mol.-%, stärker bevorzugt 50-80 Mol-%, des Bausteins M(1).

Monomere, die zu einem Baustein M(2) führen, sind bevorzugt Alkyl(meth)acrylate, wobei der Alkylrest ein C₁-C₈-Kohlenwasserstoffrest (R⁷) ist. Besonders bevorzugt ist M'(2) n-Butyl(meth)acrylat, tert.-Butylmethacrylat, isoButylmethacrylat, und 2-Ethylhexylmethacrylat.

In einer bevorzugten Ausführungsform umfasst die Komponente (2) 5-65 Mol-%, bevorzugt 10-55 Mol-%, stärker bevorzugt 16-49 Mol-%, des Bausteins M(2).

Monomere, die zu einem Baustein M(3) führen, sind bevorzugt (Meth)acrylate oder (Meth)acrylamide, bevorzugt (Meth)acrylate, mit einer Hydroxy- oder EpoxyGruppe. Bevorzugte Monomere M'(3) sind Glycidylmethacrylat und 2-Hydroxyethylmethacrylat.

In einer bevorzugten Ausführungsform umfasst die Komponente (2) 0,1-8 Mol-%, bevorzugt 0,5-5 Mol.-%, stärker bevorzugt 1-4 Mol-% des Bausteins M(3).

In einer bevorzugten Ausführungsform umfasst die Komponente (2) den Baustein M(1), den Baustein M(2) und den Baustein M(3).

In einer bevorzugten Ausführungsform umfasst die Komponente (2) 30-90 Mol-% des Bausteins M(1), 5-65 Mol-% des Bausteins M(2) und 0,1-5 Mol.-% des Bausteins M(3).

In einer bevorzugten Ausführungsform umfasst die Komponente (2) keine Bausteine, die durch Polymerisation von Styrol, Methylstyrol, Vinylidenchlorid und/oder Vinylchlorid entstehen.

Das Copolymer (C) (Komponente (2)) kann in organischen Lösungsmitteln über eine radikalische Polymerisation hergestellt werden. Dazu werden die Monomere M'(1), M'(2), M'(3) im Lösungsmittel gelöst und die Polymerisation unter Inertgas mit Hilfe eines Radikalinitiators bei Temperaturen zwischen 50-90 °C gestartet. Als Lösungsmittel können z.B. aliphatische und aromatische Kohlenwasserstoffe, Ester, Ketone und Ether verwendet werden. Bevorzugt werden aliphatische Kohlenwasserstoffe, Methylethylketon, Methylpropylketon, Ethylacetat, Isopropylacetat, Butylacetat, Tetrahydrofuran eingesetzt. Besonders bevorzugt sind aliphatische Kohlenwasserstoffe und Isoproylacetat.

Übliche Radikalinitiatoren sind Azoverbindungen, wie z.B. Azobisisobutyronitril, und Azobisvaleronitril, Hydroperoxide wie z.B. Cumolhydroperoxid und tert-Butylhydroperoxid, Dialkylperoxide wie z.B. Di-tert-butylperoxid und Dicumolperoxid und Peroxyester, wie z.B. tert-Butylperbenzoat, und Diacylperoxide wie z.B. Benzoylperoxid und Lauroylperoxid.

Bevorzugt wird das Copolymer (C) über eine Emulsionspolymerisation hergestellt. Dabei werden die Monomere, Wasser, oberflächenaktive Substanzen (Tenside) und gegebenenfalls weitere Lösungsmittel, wie z.B. Alkohole (z.B. Ethanol, Isopropanol, Butyldiglykol, Propylenglykol, Dipropylenglykol, Tripropylenglykol), Ether (z.B. Dipropylenmonomethylether, Tripropylenglykolmonomethylether, Dipropylenglykolmonobutylether, Dipropylenglykoldimethylether) und Ester (wie z.B. Propylenglykolmonomethyletheracetat), zu einer Präemulsion vermischt. Diese kann gegebenenfalls mit geeigneten mechanischen Hilfsmitteln, wie z.B. Rührer, Ultraturrax, Dissolverscheibe, Hochdruck-, Ultraschallhomogenisator oder andere dem Fachmann bekannte Dispergierverfahren noch weiter behandelt werden.

Die Polymerisation wird dann üblicherweise unter Inertgas bei einer Temperatur von 40-90 °C unter Rühren mit einem Radikalstarter, wie Azoverbindungen, z.B. Azobisisobutyronitril, Azobisvaleronitril, 2,2'-Azobis(2-amidinopropan) dihydrochlorid, und 2,2'-Azobis[2-(2-imidazolin-2-yl)propan)dihydrochlorid, Hydroperoxide, z.B. Cumolhydroperoxid und tert-Butylhydroperoxid, Dialkylperoxid wie z.B. Di-tert-butylperoxid und Dicumolperoxid, Peroxyester, z.B. tert-Butylperbenzoat, Diacylperoxide, z.B. Benzoylperoxid und Lauroylperoxid, anorganische Peroxide, z.B. Ammoniumpersulfat und Kaliumpersulfat oder eine Kombination davon, initiiert.

Um die Kettenlänge der Copolymere zu kontrollieren, können ferner Kettenregler, wie z.B. Alkylthiole, eingesetzt werden. Der Feststoffgehalt der Polymersuspension liegt nach vollendeter Polymerisation zwischen 15-40 Gew.-% bezogen auf die Gesamtmasse.

Als oberflächenaktive Substanzen (Tenside) kommen nichtionische, anionische und/oder kationische Tenside oder Mischungen davon zum Einsatz. Bevorzugte nichtionische Tenside sind z.B. Alkoxylierungsprodukte von Fettsäuren, Fettsäureestern, Fettsäureamiden, aliphatischen Alkoholen, Zuckerderivaten. Bevorzugt werden Ethoxylierungsprodukte linearer oder verzweigter aliphatischer Alkohole mit 6 bis 22 Kohlenstoffatomen verwendet, die allein oder in Mischung zur Anwendung gelangen. Als amphoteres Tensid kann Cocamidopropylbetain eingesetzt werden. Als kationische Tenside seien beispielhaft quaternäre Ammoniumsalze, wie z.B. Di-(C₁₀-C₂₄)-alkyldimethylammoniumchlorid, (C₁₀-C₂₄)-Alkyldimethylethylammoniumchlorid oder -bromid, (C₁₀-C₂₄)-Alkyltrimethylammoniumchlorid oder -bromid, (C₁₀-C₂₄)-Alkyldimethylbenzylammoniumchlorid, Alkylmethylpolyoxyethylenammoniumchlorid, -bromid oder -monoalkylsulfat, Salze von primären, sekundären und tertiären Fettaminen mit 8 bis 24 C-Atomen mit organischen oder anorganischen Säuren, Salze von ethoxylierten primären und sekundären Fettaminen mit 8 bis 24 C-Atomen mit organischen oder anorganischen Säuren, Imidazolinium-Derivate oder Esterquats genannt. Bevorzugt werden Di-(C₁₀-C₂₄)-Alkyldimethylammoniumchlorid, (C₁₀-C₂₄)-Alkyltrimethylammoniumchlorid oder -bromid, Salze von primären, sekundären und tertiären Fettaminen mit 8 bis 24 C-Atomen mit organischen oder anorganischen Säuren und Esterquats eingesetzt. Beispiele für anionische Tenside sind Fettalkoholsulfate wie z.B. Natriumlaurylsulfat, Alkylsulfonate, wie z.B. Natriumdodecylbenzolsulfonat, und Fettsäuresalze, wie z.B. Natriumstearat.

In einer bevorzugten Ausführungsform macht die Komponente (2) (also das reine Copolymer) 10-90 Gew.-%, bevorzugt 20-80 Gew.-%, stärker bevorzugt 30-70 Gew.-% oder 5-30 Gew.-%, bezogen auf die Gesamtzubereitung (Z) aus.

Der Zusatz der Komponente (3) ist optional. Als Komponente (3) werden bevorzugt die oben beschriebenen nicht blockierten oder zumindest teilweise blockierten Di-, Tri oder Polyisocyanate (IC) verwendet. Verbindungen der Komponente (3) werden auch als Booster bezeichnet und bewirken wasserabweisende Eigenschaften. Gleichzeitig wird aufgrund der Polyfunktionalität des Isocyanates (IC) eine Vernetzung zwischen den auf den meisten Substraten vorhandenen funktionellen Gruppen (z.B. -OH, -COOH oder - NH₂-Gruppen) und den nicht umgesetzten funktionellen Gruppen der Komponente (1) (z.B. -OH, -COOH oder -NH₂-Gruppen) bewirkt, wodurch die Beständigkeit gegenüber Waschprozessen deutlich verbessert und die Resistenz gegenüber Abrasion erhöht werden kann.

Die Komponente (3) kann sowohl in nicht blockierter als auch in zumindest teilweise blockierter Form zur Verwendung gelangen. Bei der Verwendung der nicht blockierten oder teilweise blockierten Formen der Komponente (3) muss bei der Verwendung in protischen Lösungsmitteln oder Wasser eine vorzeitige Umsetzung der freien NCO-Gruppen mit den reaktionsfähigen aktiven Wasserstoffatomen des Anwendungsmediums minimiert bzw. vermieden werden. D.h. die nicht blockierten oder teilweise blockierten Polyisocyanate haben nur eine begrenzte Topfzeit in diesen Anwendungsmedien.

Sofern die Komponente (3) aus Anwendungsmedien auf Flächengebilde appliziert werden soll, welche aktive Wasserstoffatome tragen, ist häufig ein vollständiger Schutz der reaktionsfähigen NCO-Gruppen durch Blockierung mit geeigneten Blockierungsmitteln notwendig. Bevorzugtes blockiertes Isocyanat (IC) ist bereits oben beschrieben. Um eine vollständige Blockierung zu erzielen, wird üblicherweise ein geringer stöchiometrischer Überschuss an Blockierungsagens eingesetzt. Sofern Produkte für wässrige Anwendungen herzustellen sind, müssen die blockierten Di-, Tri- oder Polyisocyanate, gegebenenfalls gelöst in organischem Lösemittel unter Verwendung geeigneter oberflächenaktiver Substanzen (Tenside) in eine Emulsion überführt werden.

In einer besonderen Ausführungsform können als Booster auch Derivate von Di-, Tri- oder Polyisocyanaten (Komponente (3)) eingesetzt werden, deren Selbstemulgierfähigkeit in Wasser verbessert ist. Bevorzugt wird als Komponente (3) mit Polyalkoxymonoalkylether modifiziertes Di-, Tri- oder Polyisocyanat (IC), insbesondere mit Polyethylenoxidmonoalkylether modifiziertes Di-, Tri- oder Polyisocyanat (IC) (siehe oben) verwendet. Diese Derivate bilden beim Eintrag in Wasser spontan feinteilige Emulsionen mit hoher Stabilität und guter Verträglichkeit mit den anderen Komponenten der Zubereitung.

Vorzugsweise werden 0-50 Gew.-%, bevorzugt 1-35 Gew.-%, stärker bevorzugt 5-35 Gew.-%, stärker bevorzugt 5-25 Gew.-%, noch stärker bevorzugt 5-15 Gew.-% der Komponente (3) bezogen auf die Gesamtzubereitung eingesetzt. Komponente (3) kann auch aus lösemittelhaltigen, wasserfreien Medien direkt und ohne Formulierungshilfsmittel eingesetzt werden.

Die erfindungsgemäße Zubereitung kann ferner Wasser und/oder mindestens ein organisches Lösungsmittel enthalten. Bevorzugt ist die Komponente (4) Wasser oder ein Gemisch aus Wasser und mindestens einem organischen Lösungsmittel. Bevorzugte organische Lösungsmittel sind ausgewählt aus der Gruppe bestehend aus Estern, z.B. Ethylacetat, n-Propylacetat, Isopropylacetat, n-Butylacetat, Isobutylacetat oder Amylacetat, Ketonen, z.B. Aceton oder Methylethylketon, und gesättigten Kohlenwasserstoffen, wie z.B. n-Hexan, n-Heptan oder n-Octan.

Die Komponente (4) kann separat zugesetzt werden oder zusammen mit den Komponenten (1), (2), (3) und/oder (5) in die Zubereitung eingebracht werden. Die einzelnen Komponenten (1), (2) und gegebenenfalls (3) und (5) werden bevorzugt unter Verwendung der Komponente (4) als Lösung oder Suspension, z.B. Dispersion oder Emulsion, stärker bevorzugt Emulsion, stärker bevorzugt Öl-in-Wasser-Emulsion, separat hergestellt, und anschließend zur erfindungsgemäßen Zubereitung formuliert.

In einer bevorzugten Ausführungsform macht die Komponente (4) 20-99,9 Gew.-%, bevorzugt 40-99,8 Gew.-%, stärker bevorzugt 50-99 Gew.-%, bezogen auf die Gesamtzubereitung (Z) aus.

Die erfindungsgemäße Zubereitung (Z) kann ferner mindestens eine oberflächenaktive Substanz umfassen. Bevorzugt ist die oberflächenaktive Substanz ein Tensid. Komponente (5) ist insbesondere zu verwenden, wenn die Zubereitung in Form einer Suspension, insbesondere einer Dispersion oder Emulsion, vorliegt. Die Tenside gewährleisten eine möglichst homogene Verteilung der Phasen, insbesondere der Öl-Phase in der wässrigen Phase. Als oberflächenaktive Substanz werden insbesondere nicht ionische, kationische oder anionische Tenside verwendet.

Bevorzugte nichtionische, anionische oder kationische Tenside sind oben beschrieben.

Die Komponente (5) kann separat zugesetzt werden oder zusammen mit den Komponenten (1), (2), (3) und/oder (4) in die Zubereitung eingebracht werden. Die einzelnen Komponenten (1), (2) und gegebenenfalls (3) werden bevorzugt unter Verwendung der Komponente (5) als Lösung oder Suspension, z.B. Dispersion oder Emulsion, stärker bevorzugt Emulsion, stärker bevorzugt Öl-in-Wasser-Emulsion, separat hergestellt, und anschließend zur erfindungsgemäßen Zubereitung formuliert.

Die üblichen Anwendungsmengen der Komponente (5) liegen vorzugsweise bei 0-20 Gew.-%, bevorzugt 1-20 Gew.-%, stärker bevorzugt 2-15 Gew.-%, bezogen auf die Gesamtmenge der Komponenten (1), (2), ggf. (3) und/oder ggf. (5).

Die erfindungsgemäße Zubereitung (Z) kann ferner mindestens ein Umsetzungsprodukt (CDI) umfassen. Bevorzugt wird das Umsetzungsprodukt (CDI) durch folgende Schritte erhalten
a) Bereitstellen mindestens eines Di-, Tri- oder Polyisocyanats (IC),
b) Umsetzen von (IC) mit mindestens einer organischen Verbindung (O), die mindestens eine Isocyanat-reaktive Gruppe enthält, wobei das molare Verhältnis von Isocyanatgruppen zu Isocyanat-reaktiven Gruppen auf 10:1 bis 3:2, bevorzugt 4:1 bis 2:1, eingestellt ist, und
c) Carbodiimidisieren der nach Schritt b) vorliegenden Produkte mit einem Katalysator bei Temperaturen von 25-150 °C, bevorzugt 40-100 °C.

Alternativ kann das Umsetzungsprodukt (CDI) erhalten werden durch folgende Schritte
a) Bereitstellen mindestens eines Di-, Tri- oder Polyisocyanats (IC),
b) Carbodiimidisieren von (IC) mit einem Katalysator bei Temperaturen von 25-150 °C, bevorzugt 40-100 °C, und
c) Umsetzen der nach Schritt b) vorliegenden Produkte mit mindestens einer organischen Verbindung (O), die mindestens eine Isocyanat-reaktive Gruppe enthält, wobei das molare Verhältnis von Isocyanatgruppen zu Isocyanat-reaktiven Gruppen auf ein Verhältnis von 1:1 eingestellt ist.

Bevorzugt ist die organische Verbindung (O) ausgewählt aus der Gruppe bestehend aus Monoamin, Monoalkohol, Diamin, Diol, Polyamin und Polyol, bevorzugt Monoamin, Monoalkohol, Diamin und Diol. Besonders bevorzugt ist die organische Verbindung (O) ausgewählt aus der Gruppe bestehend aus
R⁹-OH,
R⁹-NH₂,
HO-R¹⁰-OH und
H₂N-R¹⁰-NH₂, wobei
R⁹ ein gesättigter oder ungestättigter Kohlenwasserstoffrest mit 12-40 Kohlenstoffatomen ist, der gegebenenfalls mindestens eine Gruppe ausgewählt aus -CO-O-, -CO-, -CO-NH- und -O- enthalten kann und gegebenenfalls substituiert ist mit mindestens einer Polyalkylenoxid-, kationischen, anionischen und/oder amphoteren Gruppe, und
R¹⁰ ein gesättigter oder ungestättigter Kohlenwasserstoffrest mit 12-40 Kohlenstoffatomen ist, der gegebenenfalls mindestens eine Gruppe ausgewählt aus -CO-O-, -CO-, -CO-NH- und -O- enthalten kann und gegebenenfalls substituiert ist mit mindestens einer Polyalkylenoxid-, kationischen, anionischen und/oder amphoteren Gruppe.

Dabei kann die kationische Gruppe ausgewählt sein aus einer Amoniumgruppe. Die anionische Gruppe kann ausgewählt sein aus einer Carboxylat-, Sulfonat- und/oder Phosphatgruppe. Die amphotere Gruppe ist bevorzugt ausgewählt aus einem Betain und/oder Sulfobetain. In einer bevorzugten Ausführungsform ist der Monoalkohol ausgewählt aus Cetylalkohol, Stearylalkohol, Behenylalkohol, Glycerindistearat, Glycerindibehenat, Pentaerythrittristearat, Sorbitantristearat, Triethanolamindistearat und Mischungen davon. Als Monoamin werden bevorzugt Stearylamin, Distearylamin, Umsetzungsprodukte aus Diethanolamin mit Fettsäuren und Mischungen davon verwendet. Geeignete Diamine sind z.B. Dimerfettsäurediamine. Geeignete Diole sind beispielsweise Dimerfettsäurediole.

Die Carbodiimidisierung erfolgt bevorzugt katalytisch. Katalysatoren sind dem Fachmann bekannt und können ausgewählt sein aus Phospholenoxiden, insbesondere 3-Methyl-1-phenyl-2-phospholenoxid, 1-Methyl-3-phospholenoxid, 1-Methyl-2-phospholenoxid, 1,3-Dimethyl-2-phospholenoxid und 1,3-Dimethyl-3-phospholenoxid, und Quecksilberverbindungen.

Die Carbodiimidisierung erfolgt üblicherweise bei Temperaturen von 25-150 °C, bevorzugt 40-100 °C, stärker bevorzugt 50-80 °C. Bevorzugt wird der Katalysator mit 0,1-1 Mol-% bezogen auf die bei der Carbodiimidisierung vorliegenden Isocyanatgruppen eingesetzt.

In einer bevorzugten Ausführungsform liegt der Gehalt des Umsetzungsprodukts (CDI) vorzugsweise bei 0-50 Gew.-%, bevorzugt 1-50 Gew.-%, stärker bevorzugt 5-35 Gew.-%, noch stärker bevorzugt 5-15 Gew.-%, bezogen auf die Gesamtzubereitung. Das Umsetzungsprodukt (CDI) kann gegebenenfalls in Wasser und/oder mindestens einem organischen Lösungsmittel wie oben beschrieben gelöst bzw. dispergiert werden. In diesem Fall können auch oberflächenaktive Substanzen (Tenside) - wie hierin beschrieben - eingesetzt werden. Das Umsetzungsprodukt (CDI) kann separat zugesetzt werden oder zusammen mit den Komponenten (1), (2) und/oder gegebenenfalls (3) und/oder gegebenenfalls (4) und/oder gegebenenfalls (5) in die Zubereitung eingebracht werden.

Das Umsetzungsproduct (CDI) kann auch aus lösemittelhaltigen wasserfreien Medien direkt und ohne Formulierungshilfsmittel verwendet werden.

Bevorzugt umfasst die erfindungsgemäße Zubereitung keine Wachskomponente.

Die erfindungsgemäße Zubereitung (Z) liegt bevorzugt in Form einer Suspension, bevorzugt Dispersion oder Emulsion, oder in Form einer Lösung vor. Bevorzugt ist die Zubereitung eine Emulsion (bei 20°C) oder Dispersion (bei 20°C). In diesen Fällen ist der Feststoffanteil der Zubereitung (Z) (Komponenten (1) + (2) + ggf. (3) + ggf. (5)) bevorzugt bei 20-99 Gew.-%, bevorzugt 15-35 Gew.-% bezogen auf die Gesamtzubereitung.

Gegebenenfalls können zusätzliche Solubilisierungsmittel, wie z.B. Ethylenglykol, Propylenglykol, Dipropylenglykol, Dipropylenglykolmonomethylether, Mono- oder Diethylenglykolmonobutylether oder N-Methypyrrolidon verwendet werden. Die Emulgierung kann dabei unter Zuhilfenahme von Hochdruckhomogenisiermaschinen erfolgen.

Zur Herstellung der Suspension werden die bekannten Methoden zur Bildung von Sekundäremulsionen angewendet. Üblicherweise liegt die Emulgiertemperatur oberhalb des Schmelzbereiches der Wirksubstanzen der verwendeten Komponenten (1), (2) und gegebenenfalls (3), vorzugsweise zwischen 50 und 80 °C. Um möglichst feinteilige, besonders stabile Emulsionen zu erzeugen, wird häufig zunächst eine grobteilige Voremulsion hergestellt, deren Partikel anschließend unter Zuhilfenahme von Hochdruckhomogenisatoren auf die notwendige durchschnittliche Teilchengröße zwischen 0,1 und 10 Mikrometer verkleinert werden.

Gegebenenfalls kann die Komponente (4), insbesondere organische Lösungsmittel, zumindest teilweise nach der Herstellung der Suspension oder Lösung z.B. destillativ entfernt werden.

Üblicherweise wird Komponente (1), (2) und ggf. (3) jeweils separat ggf. unter Verwendung von Komponenten (4) und/oder (5) als Suspension oder Lösung hergestellt und anschließend zur Zubereitung (Z) formuliert.

Ein weiterer Gegenstand der Erfindung ist die Verwendung der erfindungsgemäßen Zubereitung als Hydrophobierungsmittel, insbesondere als Hydrophobierungsmittel auf Flächengebilden oder Fasern, wie z.B. textilen Substraten, Papier, Leder und mineralischen Flächengebilden, oder linienförmigen Textilien, wie z.B. Garnen, Zwirnen oder Seilen. Die Zubereitung wird vorzugsweise zur Hydrophobierung auf die Flächengebilde mit Auflagen von 0,5-5 Gew.-%, vorzugsweise 0,5-3 Gew.-% Festsubstanz bezogen auf das Gewicht des zu behandelnden Flächengebildes, aufgetragen.

*"Fasern"* im Sinne der vorliegenden Erfindung sind Naturfasern sowie Kunstfasern. Naturfasern sind bevorzugt Baumwolle, Wolle oder Seide. Synthetische Fasern oder Kunstfasern werden synthetisch aus natürlichen oder synthetischen Polymeren hergestellt und sind bevorzugt aus Polyester, Polyolefin, bevorzugt Polyethylen oder Polypropylen, stärker bevorzugt Polypropylen, Polyamid, Polyaramid, wie z.B. Kevlar® und Nomex®, Polyacrylnitril, Elasthan oder Viskose.

Ein Textil im Sinne der Erfindung ist aus mehreren Fasern hergestellt. Bevorzugt ist das Textil linienförmig oder flächig. Unter *"linienförmigem Textil"* wird beispielsweise ein Garn, ein Zwirn oder ein Seil verstanden. *"Flächige Textilien"* sind bevorzugt Vliese, Filze, Gewebe, Gewirke und Geflechte. Erfindungsgemäß können Textilien auch Mischungen von Naturfasern und synthetischen Fasern enthalten.

Besonders bevorzugt sind Flächengebilde aus textilen Substraten, wie z.B. Gewebe, Gewirke, vorverfestigte Faservliese (non-wovens). Die textilen Substrate können aus nativen Fasern, z.B. Wolle oder Baumwolle, oder aus synthetischen Fasern, beispielsweise PES-PA, und Regeneratfasern und deren Mischungen verwendet werden.

Bei der Anwendung auf textilen Flächengebilden können die erfindungsgemäßen Zubereitungen auch mit den in der Textilindustrie üblichen Textilhilfsmitteln kombiniert werden. Hervorzuheben sind Mittel, welche die Entknitterungseigenschaften verbessern, beispielsweise Methylolverbindungen des Dihydroxyethylenharnstoffes oder Methylolmelaminether unterschiedlichen Methylolierungsgrades. Ferner kommen als Textilhilfsmittel solche in Betracht, welche die Flammfestigkeit verbessern oder dem Flächengebilde einen bevorzugten Griff verleihen. Der gewünschte Warengriff kann jedoch allein durch die erfindungsgemäße Kombination der Komponenten (1) bis (3) eingestellt werden, weshalb in diesen Fällen auf weitere Textilhilfsmittel verzichtet werden kann.

Die Flächengebilde können auch aus Papier bestehen, welches nach den bekannten Papiermachermethoden und aus allen in diesem Anwendungsbereich üblichen Grundstoffen hergestellt sein kann. Die erfindungsgemäßen Zubereitungen können dabei entweder als Zusatz zur Papiermasse oder durch Auftrag auf die Oberfläche des maschinenglatten Papiers mittels Streichanlagen unter Anwendung von Walzen-, Rakel- oder Luftbürstenstreichverfahren und anschließender Infrarot-, Heißluft- oder Zylindertrocknung angewendet werden. Flächengebilde aus Leder sind ebenfalls gut für die Appretur mit den erfindungsgemäßen Zubereitungen geeignet. Sofern die Anwendung in den der Gerberei nachgeschalteten Zurichtungsprozessen erfolgt, kann dies mit den bekannten Auftragsverfahren oder durch Sprühen oder Tränken erfolgen.

Die Behandlung anderer Flächengebilde ist ebenfalls möglich. So können mineralische Flächengebilde, wie z.B. nicht lasierte Fliesen, Keramikteile oder auch Wandflächen durch Tränken mit der erfindungsgemäßen Appreturflotte hervorragende Wasserabweisung erhalten.

In einer anderen Ausführungsform kann die erfindungsgemäße Zubereitung (Z) als Additiv zur Hydrophobierung in Farben, Lacken oder Putzen eingesetzt werden. Üblicherweise liegt der Anteil an der erfindungsgemäßen Zubereitung in diesem Fall bei 1 bis 10 Gew.-% Festsubstanz der erfindungsgemäßen Zubereitung bezogen auf die Gesamtzusammensetzung.

Ein weiterer Aspekt der vorliegenden Erfindung ist ein Verfahren zur Hydrophobierung von Substraten, insbesondere von Flächengebilden wie oben beschrieben durch Aufbringen der erfindungsgemäßen Zubereitung (Z) auf ein Substrat. Das Aufbringen erfolgt über die dem Fachmann bekannten Verfahren, beispielsweise durch Sprühen, Tauchen, Tränken, Streichen oder durch Schwammauftrag. Im Falle von Textilsubstraten kann die Zubereitung durch Aufbringen mittels Zwangsapplikation oder Ausziehverfahren aufgebracht werden. Üblicherweise wird bei der Zwangsapplikation eine Flotte in der gewünschten Konzentration bereitgestellt und mittels einer Zwangsapplikation aus wässrigem Medium auf dem Foulard mit Flottenaufnahmen von 40-100 % aufgebracht.

Das erfindungsgemäße Verfahren umfasst ferner bevorzugt einen Nachbehandlungsschritt, insbesondere zur Trocknung. Bevorzugt wird das Substrat, welches mit der Zubereitung (Z) ausgerüstet wurde, zunächst bei etwa 80-110 °C, stärker bevorzugt 90-100 °C vorgetrocknet und anschließend bei etwa 30-170 °C, bevorzugt 140-160 °C für bevorzugt 1-5 min, stärker bevorzugt 1-4 min behandelt. Die Dauer der Hitzebehandlung ist jeweils abhängig von den angewandten Temperaturen.

Viele konfektionierte Artikel werden entweder im häuslichen Bereich in Haushaltswaschmaschinen oder in Industriewaschmaschinen gewaschen oder einer chemischen Reinigung unterzogen. Die durch die Zubereitung öl-, wasser- und schmutzabweisend appretierten Kleidungsstücke erleiden durch die Wäsche oder Reinigung einen Verlust dieser Eigenschaften. Durch eine Nachbehandlung der gewaschenen textilen Substrate mit der erfindungsgemäßen Zubereitung gemäß oben beschriebenen Verfahren können diese Eigenschaften wieder aufgefrischt und revitalisiert werden. Bevorzugt wird das Verfahren daher auch auf textilen Substraten angewendet, die bereits (mehrmals) gewaschen sind.

Die Behandlung der gewaschenen textilen Substrate erfolgt in der Wasch- bzw. Schleudertrommel durch Aufgießen einer Flotte der erfindungsgemäßen Zubereitungen auf die schleuderfeuchten Waschartikel und anschließendes Trocknen im Tumbler.

### Beispiele

### Ausrüstung Gewebe, Wasserabweisung

Die nachfolgenden Beispiele erläutern die Erfindung. Die Applikation der Appreturen auf textilen Flächengebilden erfolgte auf einem Laborfoulard des Typs LFV 350/2 "RFA" (Fa. Benz, Schweiz) mit nachfolgender Trocknung und Heißbehandlung auf einem Laborspannrahmen des Typs TKF 15/M 350 (Fa. Benz, Schweiz). Die Bestimmung der Flottenaufnahme erfolgte durch Auswiegen der appretierten Testmuster vor und nach der Applikation.

Die Prüfung der modifizierten Substrate erfolgte im Normklima (20 °C, 65 % rel. Luftfeuchtigkeit) 24 Stunden nach Konditionierung. Auflagemengen sowie die Bedingungen der Heißbehandlung sind in den Tabellen 3a und 3b aufgeführt.

Die Wasserabweisung wurde auf den textilen Flächengebilden sowohl mittels Spraytest gemäß AATCC Standard Test Method 22 als auch mittels des wesentlich stärker differenzierenden "Bundesmanntests" gemäß DIN 53 888 getestet. Die Prüfung gemäß AATCC Standard Test Method 22 erfolgt durch Aufsprühen von destilliertem Wasser unter kontrollierten Bedingungen auf das zu testende textile Substrat und anschließendem visuellen Vergleich des Benetzungsmusters zu Bildern eines in der Testmethode aufgeführten Beurteilungsstandards. Die angegebenen Zahlenwerte beziehen sich dabei auf das Erscheinungsbild der Oberfläche nach dem Aufsprühen des Wassers und haben folgende Bedeutung:
- 100 =: Kein Anhaften von Wassertropfen oder Benetzung der oberen Oberfläche
- 90 =: Vereinzeltes Anhaften von Wassertropfen oder Benetzung der oberen Oberfläche
- 80 =: Benetzung der oberen Oberfläche an den Auftreffpunkten des Wassers
- 70 =: Teilweise Benetzung der ganzen oberen Oberfläche
- 50 =: Vollständige Benetzung der ganzen oberen Oberfläche
- 0 =: Vollständige Benetzung der ganzen oberen und unteren Oberfläche (Durchnetzung).

Beim "Bundesmanntest" gemäß DIN 53 888 wird das zu testende textile Substrat der Einwirkung eines definierten künstlichen Regens ausgesetzt und die nach einer bestimmtem Dauer aufgenommene Wassermenge in Prozent bestimmt (in den Tabellen 3a und 3b als "Wasseraufnahme" gekennzeichnet). Weiterhin wird der in Tabellen 3a und 3b als "Abperleffekt" gekennzeichnete Wasser-Abperleffekt zur Beurteilung herangezogen. Dieser wird durch visuellen Vergleich der beregneten Testmuster mit in der DIN-Vorschrift aufgeführten Bildern nach 5 Noten beurteilt, die wie folgt gekennzeichnet sind:
- Note 5 =: Kleine Tropfen perlen lebhaft ab
- Note 4 =: Ausbildung größerer Tropfen
- Note 3 =: Tropfen bleiben stellenweise auf der Messprobe hängen
- Note 2 =: Messprobe teilweise angenetzt
- Note 1 =: Messprobe auf der gesamten Fläche an- bzw. durchgenetzt

Um die Beständigkeit der appretierten Flächengebilde gegenüber Waschprozessen zu prüfen, wurden die Testmuster gemäß EN ISO 6330:2000 bei 60 °C gewaschen und getrocknet.

### Bestimmung der Atmungsaktivität, Migrationstest

Ein Laminat bestehend aus einem nicht ausgerüstetem Polyester Oberstoffgewebe und einer atmungsaktiven Sympatexmembran wird mit der erfindungsgemäßen Zubereitung ausgerüstet. Die Zubereitung wird auf das aufgespannte Laminat mittels Pumpspray auf das Polyester-Oberstoffgewebe einseitig aufgebracht. Die Einsatz- und Auflagemengen sind Tabelle 3c zu entnehmen.

Die Wasserdampfdurchlässigkeit wird analog zu JIS L 1099 Method B2 gemessen. Dabei wird ein mit dem Hydrophobierungsmittel ausgerüstetes Laminat über einen mit Kaliumacetat befüllten Becher gespannt. Dieser wird umgekehrt mit der bespannten Seite auf ein nasses Vlies platziert und man misst die Wassermenge, die das hygroskopische Salz durch die Membran hindurch aufnimmt. Man erhält den Atmungsaktivitätswert in g/24h/m²

### Wärmelagerungstest - Migrationstest

Die ausgerüsteten Laminate (Tabelle 3c) werden bei 60 °C eine Woche im Ofen gelagert. Anschließend wird die Atmungsaktivität bestimmt und der Verlust der Atmungsaktivität gegenüber den Originalwerten in Prozent (%) berechnet. Ziel ist ein möglichst geringer Verlust.

### Delamination - Haftung

Über das Foulardverfahren ausgerüstete PES-Gewebemuster Tabelle 4 werden mit dem entsprechenden Klebervlies sandwichartig zusammenlaminiert. Dazu legt man zwischen 2 ausgerüstete Gewebemuster das Klebervlies und verpresst die Struktur mit einer Thermodruckpresse der Firma Wagner (Modell: Motifprint Printstar) 30 sec bei einem Druck von 2,5 bar bei 135 °C. Zur Prüfung der Haftung werden anschließend Prüflinge einer Größe von 30x 5cm ausgestanzt. Die Haftung wird analog zu DIN 54310 mit einer Zwick Prüfmaschine gemessen. Der Wert wird als Trennkraft angegeben. Je höher die Trennkraft desto höher die Haftung.

Folgende kommerziell erhältliche Produkte wurden eingesetzt:
**Ruco-Guard WEB:** Feststoffgehalt: 25 %, wässrige Emulsion eines Butanonoximblockierten aromatischen Polyisocyanats; Rudolf GmbH
**Ruco-Guard AFB6 conc.:** Feststoffgehalt: 27 %, wässrige Emulsion eines Oleo- und Hydrophobierungsmittels auf Basis eines 2-(Perfluorhexyl)ethylmethacrylat enthaltenden Fluorcarbonpolymers, Rudolf GmbH
**Freepell 1225:** Feststoffgehalt: 25 %, wässrige Emulsion eines Paraffinwaches und eines Fettsäure-modifizierten Melaminharzes, Emerald Performance Materials
**Phobotex APK:** Feststoffgehalt: 25 %, wässrige Emulsion eines Paraffinwachs und eines Fettsäure-Aluminiumsalzes, Huntsman
**Xiameter MEM-0075:** Feststoffgehalt: 60 %, wässrige Emulsion eines reaktiven Methylwasserstoffpolysiloxans, Xiameter
**Lutensol ON 110:** Isodecanol 11 EO ; BASF
**Arquad 2C75:** Dicocosdimethylammoniumchlorid, Akzo Nobel
**Ethoquat HT25:** Stearyl-N,N-Polyoxyethylenmethylammoniumchlorid, Akzo Nobel

### Beispiele zur Herstellung der Komponente (1)

### Verbindung (A):

### Allgemeine Herstellungsvorschrift für Verbindungen (A) der Formel (AI) und/oder (All)

In einem geeignet dimensionierten Dreihalskolben, ausgestattet mit Destillationskühler, regelbarem Rührer und Innenthermometer werden die in der Tabelle 1 angegebenen Edukte (a1, a2 oder a3) und (b1) in den dort angegebenen Mengen in Gramm unter Schutzgas und Rühren aufgeschmolzen. Anschließend wird das Gemisch auf die in der Tabelle 1 angegebene Endtemperatur (T) aufgeheizt und solange weitergerührt bis kein Reaktionswasser mehr abdestilliert und die in den Tabelle 1 genannte Säurezahl (SZ) erreicht ist. Bedarfsweise kann bei den Veresterungsreaktionen 0,1 % Schwefelsäure als Katalysator zugesetzt werden. Bei den Amidierungsreaktionen ist kein Zusatz von Katalysator notwendig. Das resultierende Kondensationsprodukt wird ausgegossen und nach dem Abkühlen zu Schuppen verarbeitet.

### Verbindung (A):

### Besondere Herstellungsvorschrift für Verbindungen (A) der Formel (AI) und/oder (All) unter Verwendung von Alkylisocyanaten (b2) und Weiterverarbeitung zum Umsetzungsprodukte (S)

In einem geeignet dimensionierten Dreihalskolben, ausgestattet mit Rückflusskühler, regelbarem Rührer, Innenthermometer und Tropftrichter werden die in der Tabelle 1 angegebenen Verbindungen (a1) und (b2) in Gramm in Isopropylacetat (Lösungsmittel (LM)) vorgelegt. Anschließend werden, bezogen auf die Gesamtmenge der Komponenten, 0,05 % 1,4-Diazabicylo(2,2,2)octan als Katalysator zugesetzt und die Mischung solange bei 80 °C gerührt, bis im IR-spektrum keine NCO-Bande mehr erkennbar ist. Anschließend wird dem Gemisch zur Herstellung des Umsetzungsproduktes (S) die in Tabelle 1 angegebene Menge in Gramm von Komponente (IC) zugegeben und solange bei 80 °C weitergerührt, bis im IR-Spektrum keine NCO-Bande mehr erkennbar ist.

### Umsetzungsprodukte (S) (= Komponente (1)):

### Allgemeine Herstellungsvorschrift für Umsetzungsprodukte (S) aus einer Verbindung (A) und nicht blockierten oder teilblockierten Di-, Tri- oder Polyisocyanaten (IC)

In einem geeignet dimensionierten Dreihalskolben, ausgestattet mit Rückflusskühler, regelbarem Rührer, Innenthermometer und Tropftrichter werden die in der Tabelle 1 angegebenen Verbindungen (A) und die Komponenten (IC) in den dort angegebenen Mengen in Gramm in Isopropylacetat (LM) vorgelegt. Anschließend werden, bezogen auf die Gesamtmenge der Komponenten, 0,05 % 1,4-Diazabicylo(2,2,2)octan als Katalysator zugesetzt und die Mischung solange bei 65 °C gerührt, bis im IR-Spektrum keine NCO-Bande mehr erkennbar ist.

### Besondere Herstellungsvorschrift für die in den Emulsionen (E) 3 und 8 eingesetzten Umsetzungsprodukte (S) (=Komponente 1)

Zur Herstellung der Emulsionen (E) 3 gemäß Tabelle 1 wird ein Umsetzungsprodukt (S) verwendet, bei dessen Herstellung (Reaktion der Komponente (A) mit dem Isocyanat (IC)) noch die in der Tabelle 1 angegebene Menge in Gramm Dimethylaminoethanol zugesetzt wird. Zur Herstellung der Emulsionen (E) 8 gemäß Tabelle 1 wird ein Umsetzungsprodukt (S) verwendet, bei dessen Herstellung (Reaktion der Komponente (A) mit dem Isocyanat (IC)) noch die in der Tabelle 1 angegebene Menge in Gramm Bisoctadecylamin zugesetzt wird.

### Emulsionen (E):

### Allgemeine Herstellungsvorschrift für Emulsionen (E) aus den Umsetzungsprodukten (S) (=Komponente (1))

**Ölige Phase:** In einem geeignet dimensionierten Becherglas werden die in Tabelle 1 angegebenen Mengen in Gramm von Umsetzungsprodukt (S), vorliegend im vorstehend genannten Isopropylacetat vorgelegt und unter Rühren auf 65-70 °C aufgeheizt, bis sich eine klare, homogene Lösung ergibt. Das zu verwendende Umsetzungsprodukt (S) muss gegebenenfalls vor der Anwendung bei 65-70 °C aufgeschmolzen werden, um ein homogenes Produkt zu erhalten.

**Wässrige Phase:** In einem geeignet dimensionierten Becherglas werden die in der Tabelle 1 angegebenen Mengen in Gramm an Komponente (5) in der angegebenen Menge Wasser bei 65 °C gelöst. Unter einem Schnellrührer werden beide Phasen zu einer grobteiligen Voremulsion verrührt und anschließend bei 65 °C auf der Hochdruckhomogenisiermaschine bei 300-500 bar homogenisiert, bis eine durchschnittliche Teilchengröße zwischen 0,1 und 10 Mikrometer erreicht ist. Anschließend wird das Lösemittel (LM) auf dem Rotationsverdampfer im Vakuum durch azeotrope Destillation entfernt. Gegebenenfalls wird der pH-Wert der erhaltenen Emulsion mit Essigsäure 60%ig auf 5-7 eingestellt, die erhaltene weiße Emulsion über einen Filter mit 20 Mikrometer filtriert und mit Wasser auf einen Feststoffgehalt von 25 % eingestellt.

### Beispiele zur Herstellung der Komponente (2)

Acrylsäure-2-[[(octadecylamine)carbonyl]oxy]ethylester wird analog zu Beispiel 2 in EP0448399 B1hergestellt.

### Copolymer Emulsion (CE(1))

62,7 g (0,150 mol) Acrylsäure-2-[[(octadecylamine)carbonyl]oxy]ethylester, 11,1 g (0,078 mol) Isobutylmethacrylat und 1,5 g (0,015 mol) Glycidylmethacrylat werden zusammen mit 20 g Dipropylenglykol vermischt und auf 80 °C erhitzt. Parallel dazu wird bei 80 °C in einem separaten Gefäß eine Lösung von 0,25 g Ethoquad HT 25, 1,0 g Arquad 2C75 und 7,7 g Lutensol ON 110 in 145 g Wasser hergestellt. Anschließend werden die wässrige und die organische Phase mit einem Ultra-Turrax unter starkem Rühren miteinander vermischt und darauffolgend noch mit einem Ultraschall-Homogenisator 3 min homogenisiert bis eine feinteilige Emulsion entsteht. Die Präemulsion wird in einen Dreihalskolben überführt. Nach mehrmaligem Inertisieren mit Stickstoff werden 0,18 g Laurylmercaptan zur Präemulsion hinzugegeben. Die Polymerisation wird durch die Zugabe von 1,05 g 2,2'-Azobis[2-(2-imidazolin-2-yl)propan)dihydrochlorid bei ca. 80 °C gestartet. Man rührt weitere 4 h bei 80 °C und erhält eine weiße Emulsion mit einem Feststoffgehalt von ca. 32 %.
Molverhältnis in Mol[%]: Monomer M'(1): Monomer M'(2):Monomer M'(3) = z.B. 63:32:5

### Copolymer Emulsion (CE(2))

265,2 g (0,75 mol) Stearylmethacrylat, 29,5 g (0,21 mol) tert.-Butylmethacrylat und 2,63 g (0,012 mol) Glycidylmethacrylat und 2,63 g (0,02 mol) 2-Hydroxyethylmethacrylat werden zusammen mit 79,5 g Dipropylenglykol vermischt und auf 60 °C erhitzt. Parallel dazu wird bei 60 °C in einem separaten Gefäß eine Lösung von 1,0 g Ethoquad HT 25, 4,0 g Arquad 2C75 und 30,8 g Lutensol ON 110 in 600 g Wasser hergestellt. Anschließend werden die wässrige und die organische Phase mit einem Ultra-Turrax unter starkem Rühren miteinander vermischt und darauffolgend noch mit einem Ultraschall-Homogenisator 3 min homogenisiert bis eine feinteilige Emulsion entsteht. Die Präemulsion wird in einen Dreihalskolben überführt. Nach mehrmaligem Inertisieren mit Stickstoff werden 0,72 g Laurylmercaptan zur Präemulsion hinzugegeben. Die Polymerisation wird durch die Zugabe von 4,2 g 2,2'-Azobis(2-amidinopropan)dihydrochlorid bei ca. 60 °C gestartet. Man rührt weitere 4 h bei 60 °C und erhält eine weiße Emulsion mit einem Feststoffgehalt von ca. 32 %.
Molverhältnis in Mol[%]: Monomer M'(1): Monomer M'(2):Monomer M'(3) = z.B. 76:21:3

### Copolymer Emulsion (CE(3))

275,0 g (0,67 mol) Behenylmethacrylat, 19,0 g (0,096 mol) 2-Ethylhexylmethacrylat und 2,63 g (0,012 mol) Glycidylmethacrylat werden zusammen mit 79,5 g Dipropylenglykol vermischt und auf 60 °C erhitzt. Parallel dazu wird bei 60 °C in einem separaten Gefäß eine Lösung von 5,0 g Ethoquad HT 25 und 30,8 g Lutensol ON 110 in 600 g Wasser hergestellt. Anschließend werden die wässrige und die organische Phase mit einem Ultra-Turrax unter starkem Rühren miteinander vermischt und darauffolgend noch mit einem Ultraschall-Homogenisator 3 min homogenisiert bis eine feinteilige Emulsion entsteht. Die Präemulsion wird in einen Dreihalskolben überführt. Nach mehrmaligem Inertisieren mit Stickstoff werden 0,72 g Laurylmercaptan zur Präemulsion hinzugegeben. Die Polymerisation wird durch die Zugabe von 4,2 g 2,2'-Azobis(2-amidinopropan)dihydrochlorid bei ca. 60 °C gestartet. Man rührt weitere 4 h bei 60 °C und erhält eine weiße Emulsion mit einem Feststoffgehalt von ca. 32 %.
Molverhältnis in Mol[%]: Monomer M'(1): Monomer M'(2):Monomer M'(3) = z.B. 86:12:2

### Copolymer Emulsion (CE(4))

265,0 g (0,67 mol) Behenylacrylat, 25,0 g (0,18 mol) tert.-Butylmethacrylat, 2,63 g (0,02 mol) 2-Hydroxyethylmethacrylat und 2,63 g (0,012 mol) Glycidylmethacrylat werden zusammen mit 79,5 g Dipropylenglykol vermischt und auf 60 °C erhitzt. Parallel dazu wird bei 60 °C in einem separaten Gefäß eine Lösung von 5,0 g Ethoquad HT 25 und 30,8 g Lutensol ON 110 in 600 g Wasser hergestellt. Anschließend werden die wässrige und die organische Phase mit einem Ultra-Turrax unter starkem Rühren miteinander vermischt und darauffolgend noch mit einem Ultraschall-Homogenisator 3 min homogenisiert bis eine feinteilige Emulsion entsteht. Die Präemulsion wird in einen Dreihalskolben überführt. Nach mehrmaligem Inertisieren mit Stickstoff werden 0,72 g Laurylmercaptan zur Präemulsion hinzugegeben. Die Polymerisation wird durch die Zugabe von 4,2 g 2,2'-Azobis(2-amidinopropan)dihydrochlorid bei ca. 60 °C gestartet. Man rührt weitere 4 h bei 60 °C und erhält eine weiße Emulsion mit einem Feststoffgehalt von ca. 32 %.
Molverhältnis in Mol[%]: Monomer M'(1): Monomer M'(2):Monomer M'(3) = z.B. 76:20:4

### Herstellung des Umsetzungsprodukts ((CDI) 1)

In einem geeignet dimensionierten Dreihalskolben, ausgestattet mit Rückflusskühler, regelbarem Rührer und Innenthermometer, werden 174 g (1 mol) Toluoldiisocyanat (Mischung 2,4-Isomer : 2,6-Isomer 80:20) gelöst in 309 g Methylethylketon vorgelegt. Anschließend werden in Portionen 135 g (0,5 mol) Stearylalkohol hinzugegeben, während die Mischung langsam auf ca. 80 °C erhitzt wird. Nach 1 h Rühren wird der freie NCO-Gehalt bestimmt. Sofern der Stearylalkohol komplett umgesetzt ist, gibt man 0,7 g LUBIO Polykat 2 (Phospholenoxid-Derivat) hinzu und startet die Carbodiimidisierungs-Reaktion. Das Reaktionsgemisch wird 9 h bei 80 °C erhitzt bis im IR-Spektrum keine NCO-Bande mehr zu sehen ist.

In einem geeignet dimensionierten Becherglas werden 1,73 g Ethoquad HT 25, 0,65 g Arquad 2 C 75 und 1,29 g Lutensol ON 110 in 346 g Wasser bei 65 °C gelöst.

Mit einem Schnellrührer werden nun die wässrige Phase und 200 g der Reaktionsmischung zu einer grobteiligen Voremulsion verrührt und anschließend bei 65 °C im Hochdruckhomogenisator bei 300-500 bar homogenisiert bis eine durchschnittliche Teilchengröße zwischen 0,1 und 10 Mikrometer erreicht ist. Anschließend wird das Lösemittel auf einem Rotationsverdampfer im Vakuum durch Destillation entfernt. Gegebenenfalls wird der pH-Wert der erhaltenen Emulsion mit Essigsäure 60 %-ig auf 5-7 eingestellt, die erhaltene weiße Emulsion über einen Filter mit 20 Mikrometer filtriert und mit Wasser auf einen Feststoffgehalt von 20 % eingestellt.

### Herstellung des Umsetzungsprodukts ((CDI 2)

In einem geeignet dimensionierten Dreihalskolben, ausgestattet mit Rückflusskühler, regelbarem Rührer und Innenthermometer, werden 174 g (1 Mol) Toluoldiisocyanat (Mischung 2,4-Isomer : 2,6-Isomer 80:20) gelöst in 328 g Methylethylketon vorgelegt. Anschließend werden in Portionen 82 g (0,25 mol) Behenylalkohol und 71 g (0,13 mol) Pripol 23 (Dimerfettsäurediol) zugegeben, während die Mischung langsam auf ca. 80 °C erhitzt wird. Nach 1 h Rühren wird der freie NCO-Gehalt bestimmt. Sofern die beiden Alkohole komplett umgesetzt sind, gibt man 0,7 g LUBIO Polykat 2 (Phospholenoxid-Derivat) hinzu und startet die Carbodiimidisierungs-Reaktion. Das Reaktionsgemisch wird 9 h bei 80 °C erhitzt bis im IR-Spektrum keine NCO-Bande mehr zu sehen ist.

In einem geeignet dimensionierten Becherglas werden 0,73 g Ethoquad HT 25, 1,65 g Arquad 2 C 75 und 1,29 g Lutensol ON 110 in 346 g Wasser bei 65 °C gelöst.

Mit einem Schnellrührer werden nun die wässrige Phase und 200 g der Reaktionsmischung zu einer grobteiligen Voremulsion verrührt und anschließend bei 65 °C im Hochdruckhomogenisator bei 300-500 bar homogenisiert bis eine durchschnittliche Teilchengröße zwischen 0,1 und 10 Mikrometer erreicht ist. Anschließend wird das Lösemittel auf einem Rotationsverdampfer im Vakuum durch Destillation entfernt. Gegebenenfalls wird der pH-Wert der erhaltenen Emulsion mit Essigsäure 60 %-ig auf 5- 7 eingestellt, die erhaltene weiße Emulsion über einen Filter mit 20 Mikrometer filtriert und mit Wasser auf einen Feststoffgehalt von 20 % eingestellt.

### Herstellung der erfindungsgemäßen Zubereitungen (Z)

Die in der Tabelle 1 aufgeführten Emulsionen (E), enthaltend die Komponenten (1) und (5), werden mit Komponente (2) abgemischt. Gegebenenfalls werden die Komponenten (3) und (4) (Wasser) und ggf. (CDI) in den angegebenen Gewichtsverhältnissen hinzugegeben, wobei die in den Tabellen 2a und 5 genannten Zubereitungen (Z) erhalten werden. In der Tabelle 2 b sind nicht erfindungsgemäße Hydrophobierungsmittel aufgeführt, die unverändert in den Anwendungsbeispielen eingesetzt werden.

### Appreturbeispiele

### Anwendung von Zubereitungen (Z) auf wässriger Basis auf textilen Flächengebilden :

Ausrüstungskonditionen und Prüfergebnisse sind in den Tabellen 3a, 3b, 3c, 4, 6, 7, 8 und 9 aufgeführt.

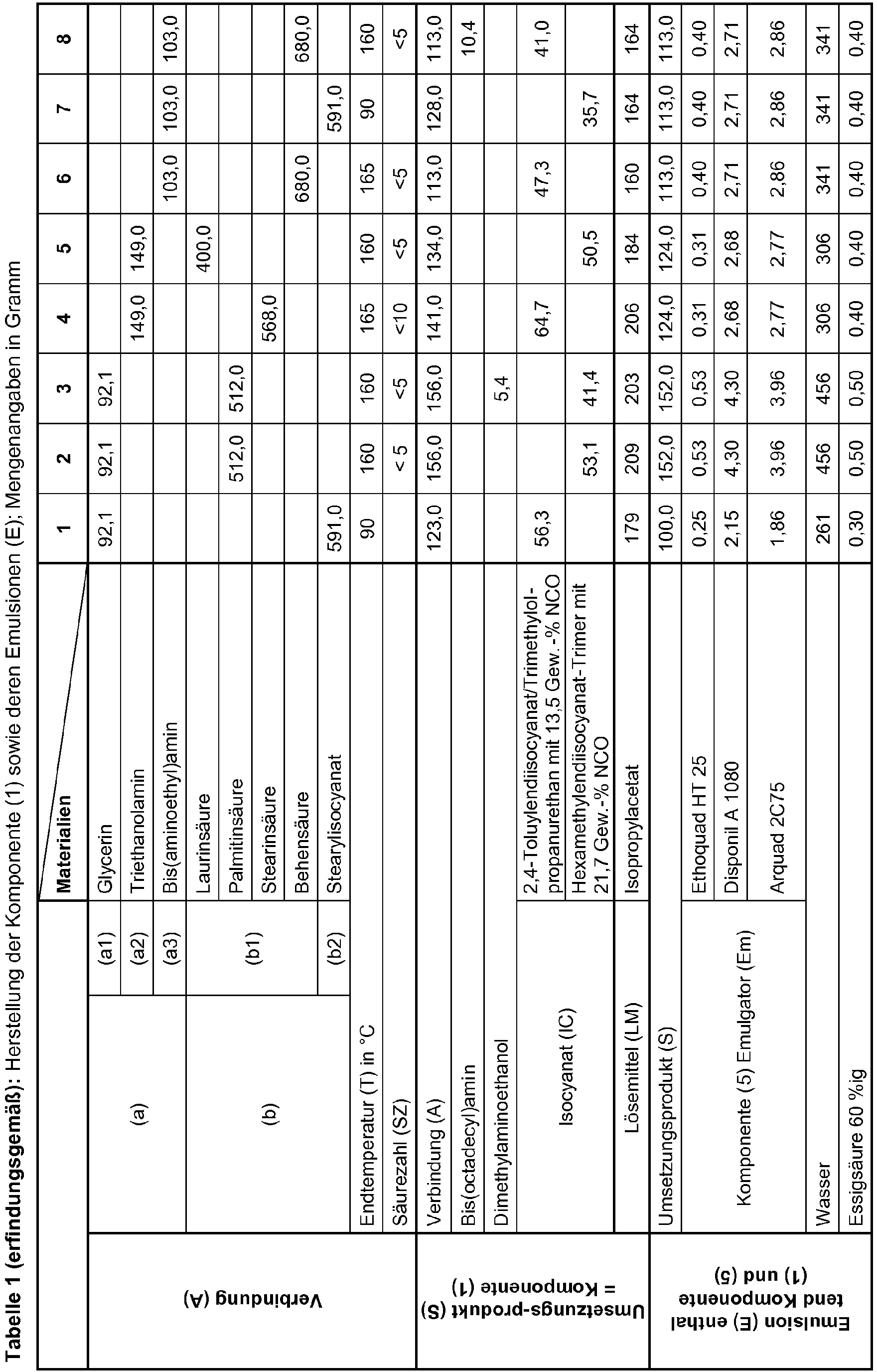

**Tabelle 2a: Mischungsverhältnisse der erfindungsgemäßen Zubereitung (Z)**

| **Gew.Teile [%] Emulsion (E), enthaltend Komponente (1) und (5)** | **Gew. Teile [%] Copolymeremulsion (CE) enthaltend Komponente (2) und (5)** | **Gew.Teile [%] Komponente (3) RUCO-GUARD WEB** | **Gew.Teile [%] Wasser** | **Zubereitung (Z)** |
|---|---|---|---|---|
| 45 von (E) 1 | 45 von (CE) 1 | - | 10 | 1 (erfindungsgemäß) |
| 45 von (E) 1 | 45 von (CE) 1 | 10 | - | 2 (erfindungsgemäß) |
| 45 von (E) 2 | 45 von (CE) 1 | - | 10 | 3 (erfindungsgemäß) |
| 45 von (E) 2 | 45 von (CE)1 | 10 | - | 4 (erfindungsgemäß) |
| 45 von (E) 3 | 45 von (CE) 2 | - | 10 | 5 (erfindungsgemäß) |
| 45 von (E) 3 | 45 von (CE) 2 | 10 | - | 6 (erfindungsgemäß) |
| 45 von (E) 4 | 45 von (CE) 2 | - | 10 | 7 (erfindungsgemäß) |
| 45 von (E) 4 | 45 von (CE) 2 | 10 | - | 8 (erfindungsgemäß) |
| 45 von (E) 5 | 45 von (CE) 3 | - | 10 | 9 (erfindungsgemäß) |
| 45 von (E) 5 | 45 von (CE) 3 | 10 | - | 10 (erfindungsgemäß) |
| 45 von (E) 6 | 45 von (CE) 3 | - | 10 | 11 (erfindungsgemäß) |
| 45 von (E) 6 | 45 von (CE) 3 | 10 | - | 12 (erfindungsgemäß) |
| 45 von (E) 7 | 45 von (CE) 4 | - | 10 | 13 (erfindungsgemäß) |
| 45 von (E) 7 | 45 von (CE) 4 | 10 | - | 14 (erfindungsgemäß) |
| 45 von (E) 8 | 45 von (CE) 4 | - | 10 | 15 (erfindungsgemäß) |
| 45 von (E) 8 | 45 von (CE) 4 | 10 | - | 16 (erfindungsgemäß) |

**Tabelle 2b: nicht erfindungsgemäße Zubereitungen (Z)**

| **Produkte** | **Zubereitung (Z)** |
|---|---|
| RUCO-GUARD AFB6 conc | 17 (nicht erfindungsgemäß) |
| Frepell 1225 | 18 (nicht erfindungsgemäß) |
| Phobotex APK | 19 (nicht erfindungsgemäß) |
| Xiameter MEM-0075 | 20 (nicht erfindungsgemäß) |

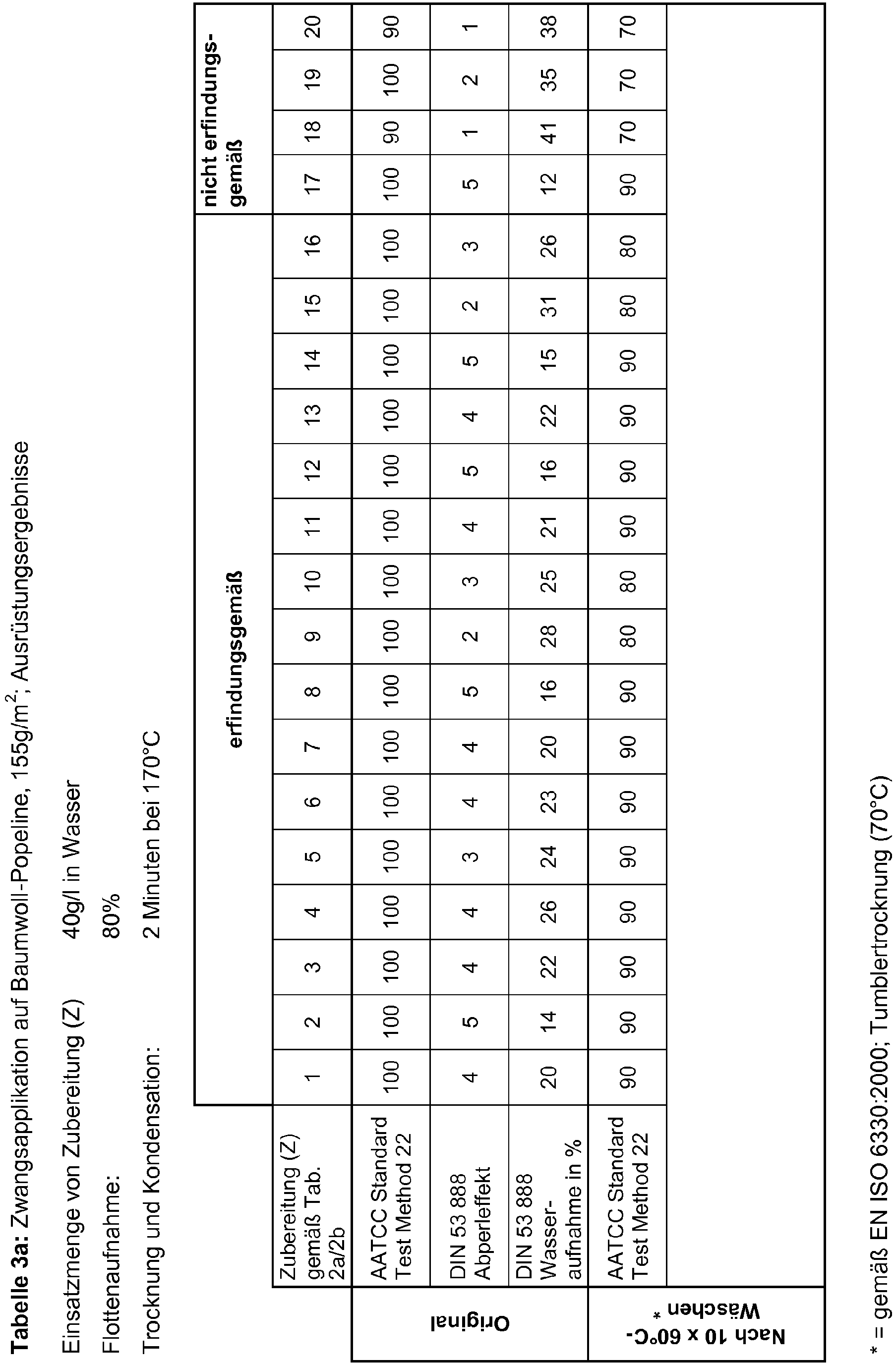

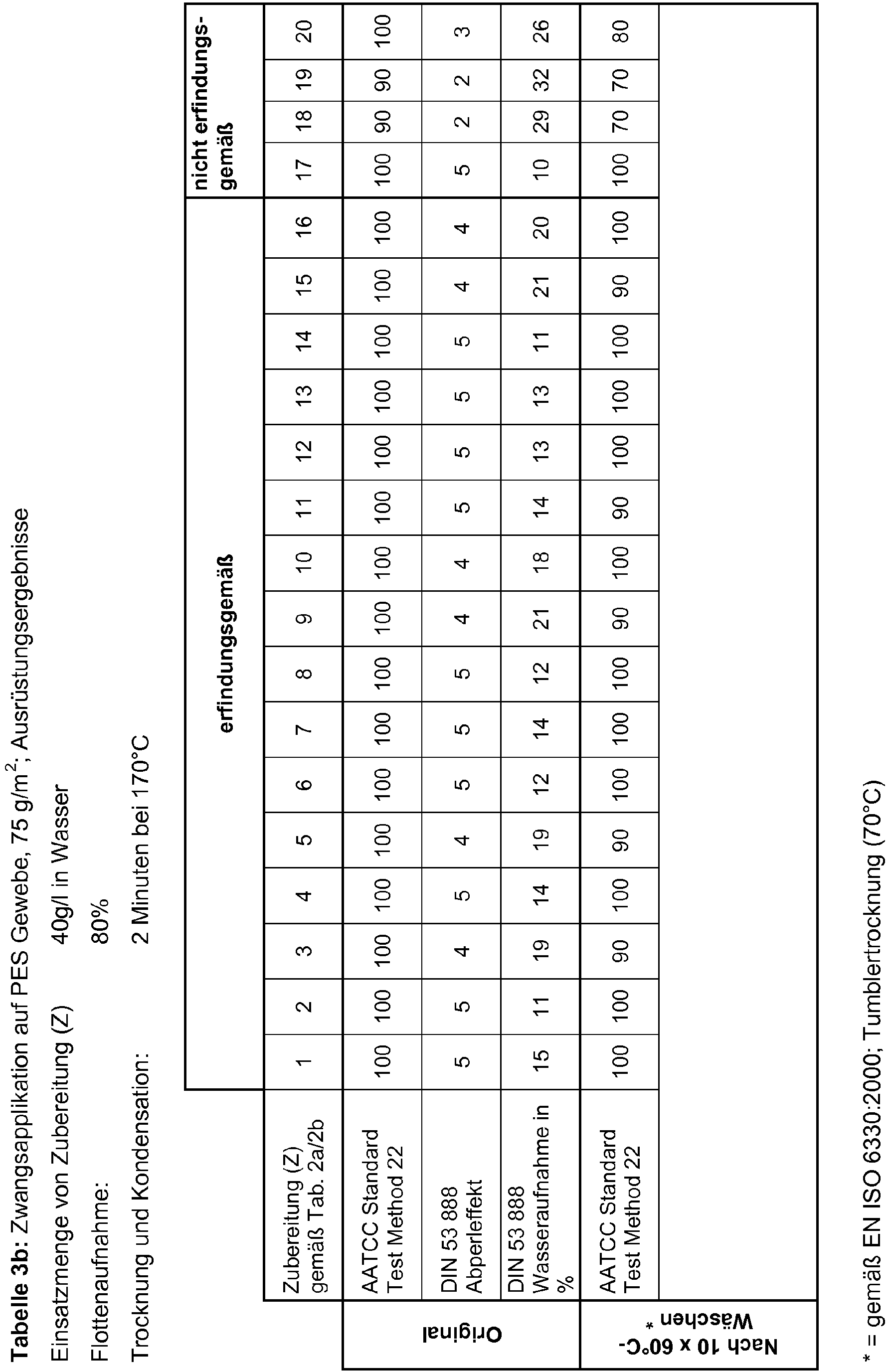

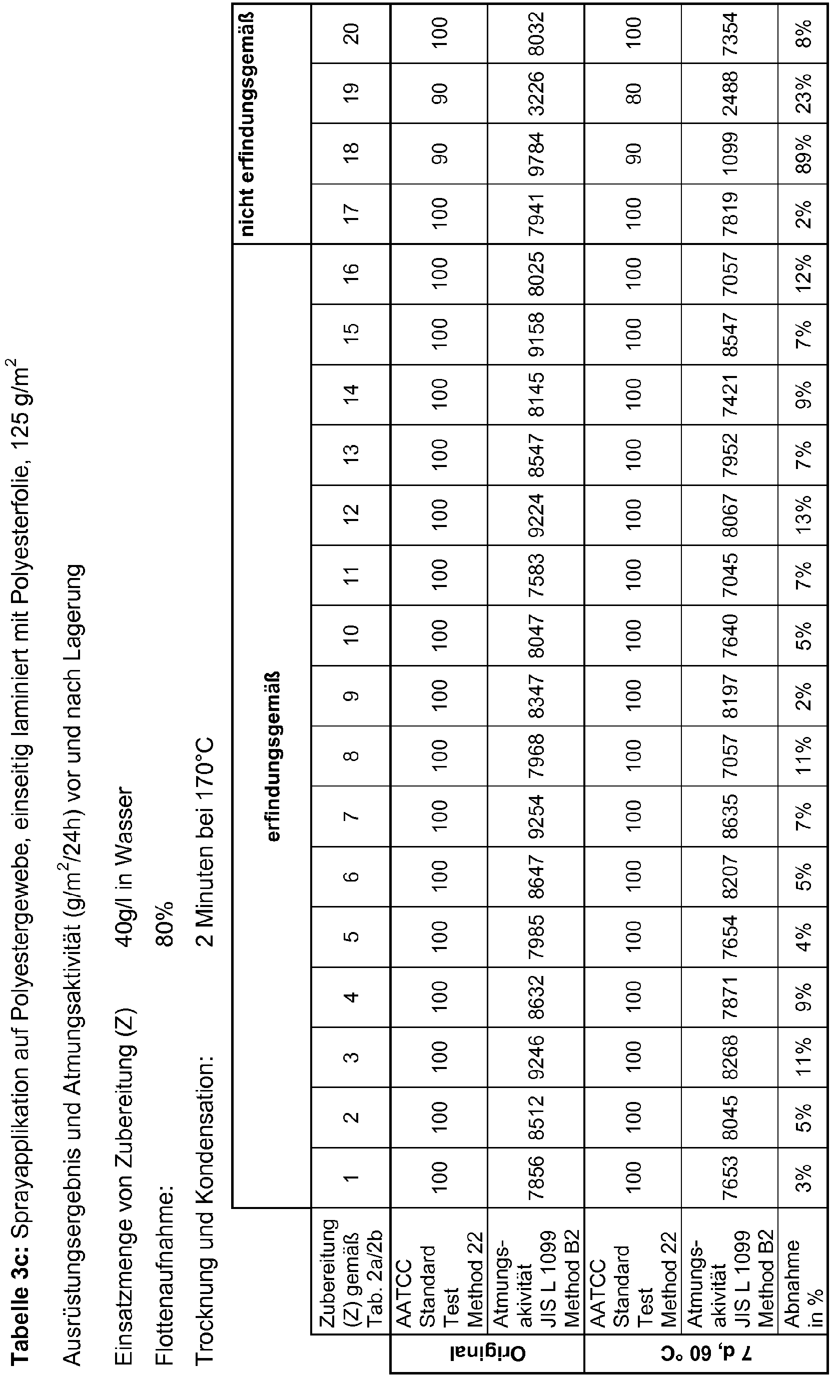

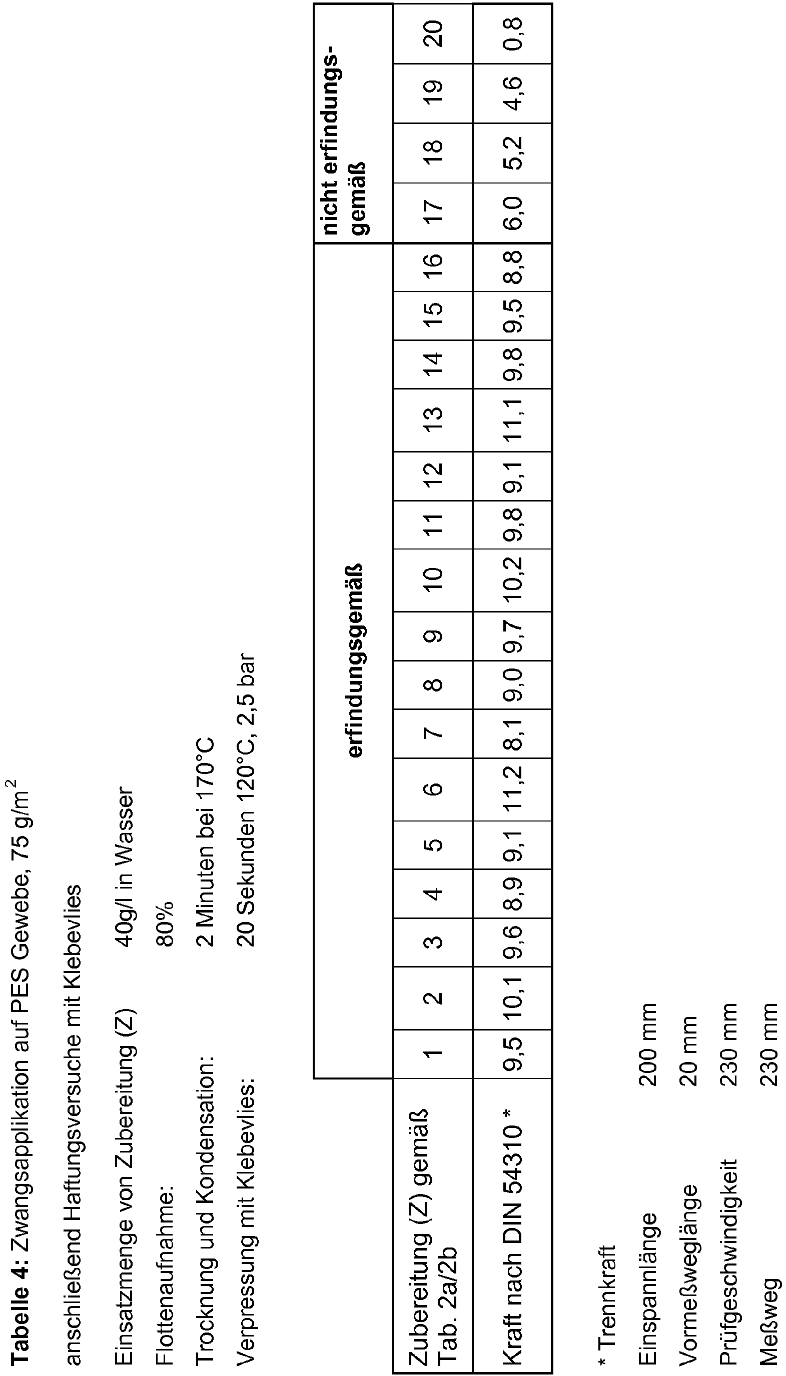

**Tabelle 5: Mischungsverhältnisse der erfindungsgemäßen Zubereitungen (Z)**

| **Gew.Teile [%] Emulsion (E), enthaltend Komponente (1) und (5)** | **Gew. Teile [%] Copolymeremulsion (CE) enthaltend Komponente (2) und (5)** | **Gew.Teile [%] (CDI)** | **Gew.Teile [%] Wasser** | **Zubereitung (Z)** |
|---|---|---|---|---|
| 45 von (E) 1 | 45 von (CE) 1 | 10 (CDI) 1 | - | 21 (erfindungsgemäß) |
| 45 von (E) 2 | 45 von (CE) 1 | 10 (CDI) 2 | - | 22 (erfindungsgemäß) |

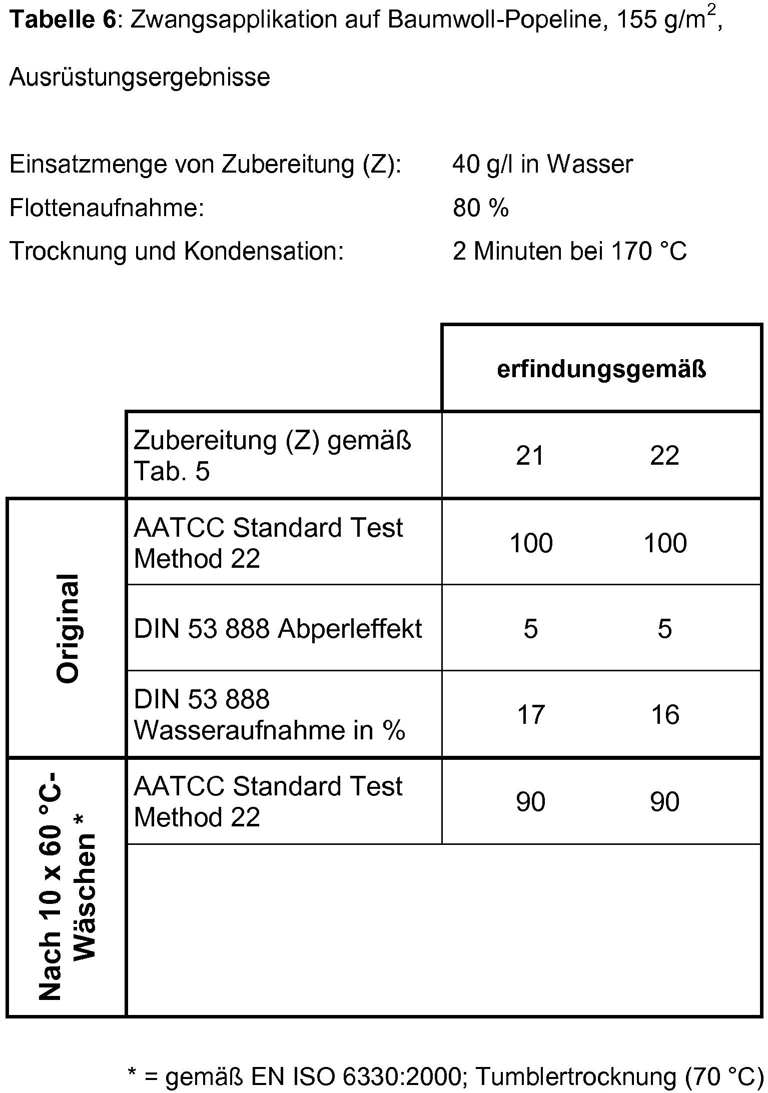

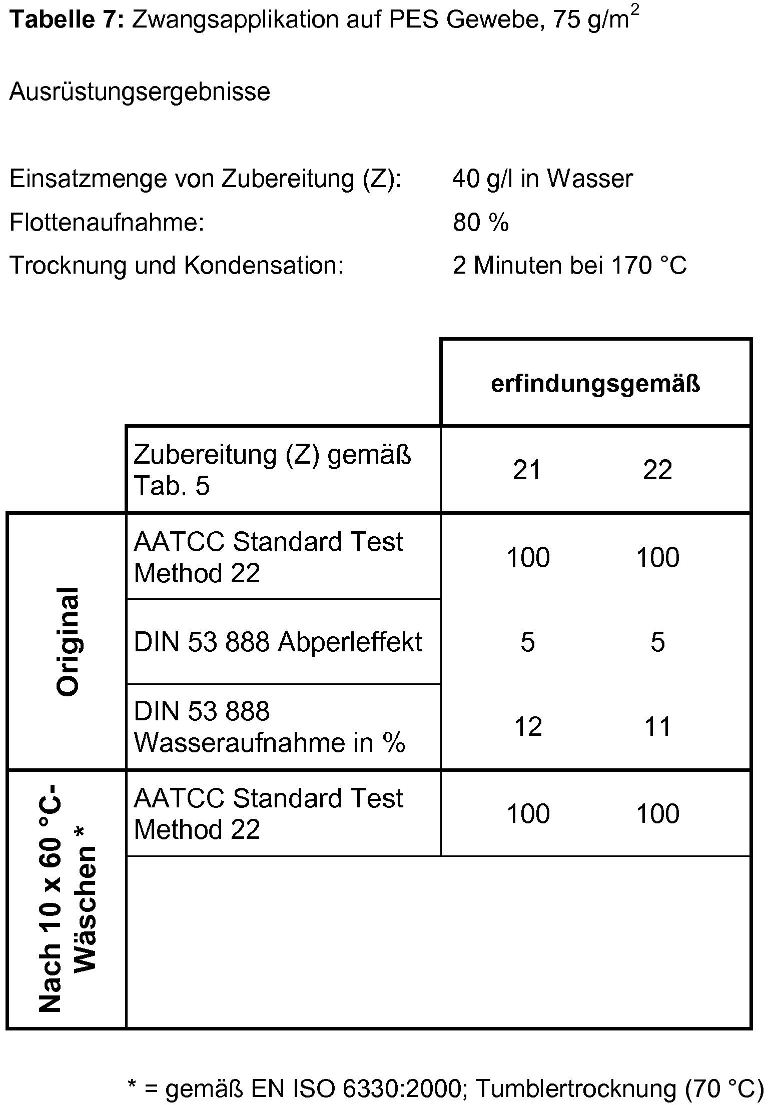

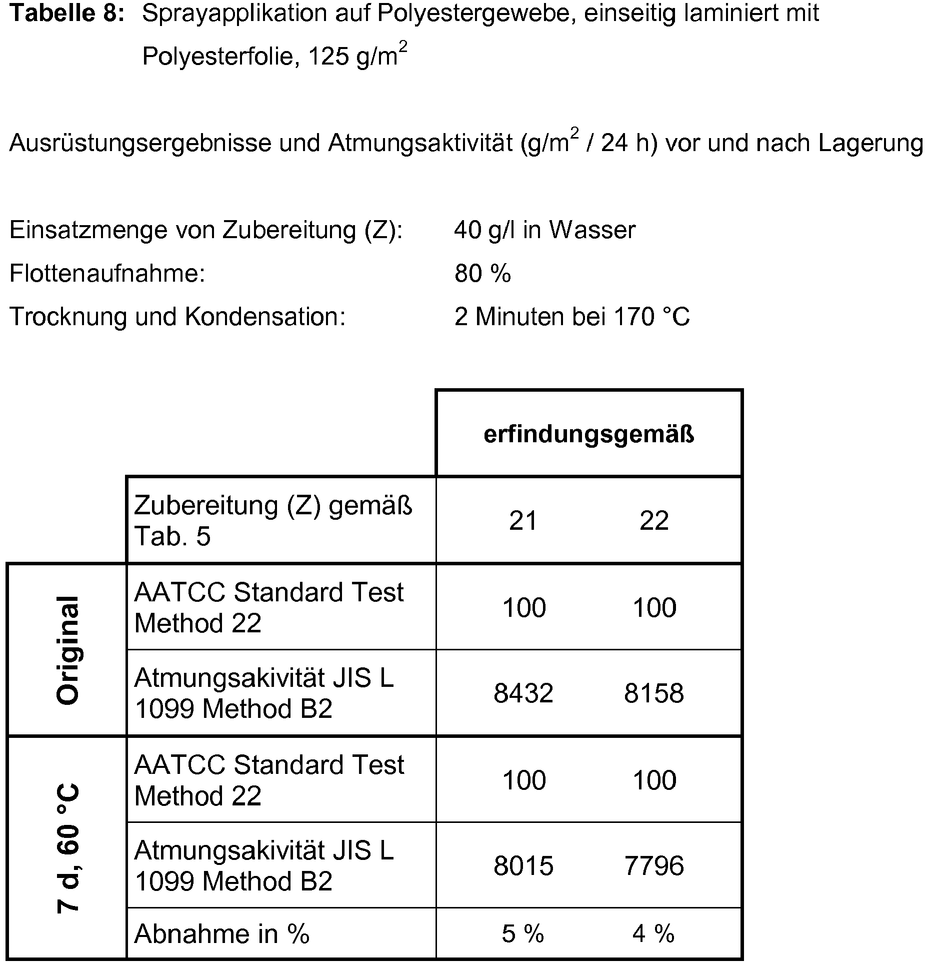

**Tabelle 9: Zwangsapplikation auf PES Gewebe, 75 g/m², anschließend Haftungsversuche mit Klebevlies**

| | | |
|---|---|---|
| Einsatzmenge von Zubereitung (Z): | | 40 g/l in Wasser |
| Flottenaufnahme: | | 80 % |
| Trocknung und Kondensation: | | 2 Minuten bei 170 °C |
| Verpressung mit Klebevlies: | | 20 Sekunden 120 °C, 2,5 bar |

| | **erfindungsgemäß** | |
|---|---|---|
| Zubereitung (Z) gemäß Tab. 5 | 21 | 22 |
| Kraft nach DIN 54310 * | 9,0 | 8,5 |

| | | |
|---|---|---|
| * Trennkraft Einspannlänge 200 mm Vormessweglänge 20 mm Prüfgeschwindigkeit 230 mm Messweg 230 mm | | |

## Patentansprüche

1. Zubereitung (Z), umfassend
(1) mindestens ein Umsetzungsprodukt (S), erhältlich durch Umsetzen mindestens einer Verbindung (A) der Formel 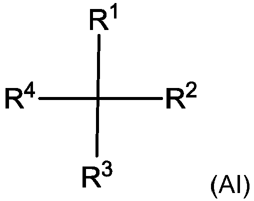 und/oder 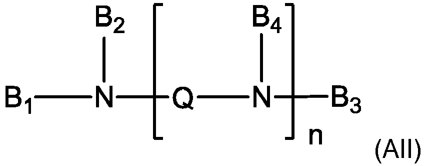
wobei R¹ -X-Y-Z oder -Z ist, mit
X = -(CH₂)_{n"}-,
Y = 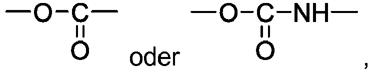
Z = -(CH₂)ₘ-CH₃,
R² 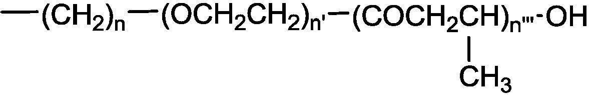 ist,
R³ -X-Y-Z, -Z oder -Y-Z ist, mit der Maßgabe, dass im Falle der Bedeutung
-Y-Z im Rest R² n durch n" ersetzt ist,
R⁴ -X-Y-Z oder -(CH₂)_{n'}H ist,
B¹ -V-W-Z oder -Z ist, mit
V = -(CH₂)_{n"}- oder 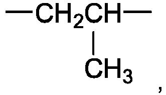
W = 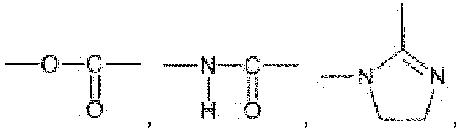 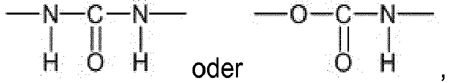
B² = -(CH₂)_{n"}-NH₂, oder 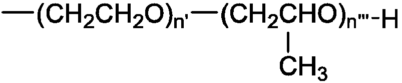 ist,
B³ = -V-W-Z, -Z oder 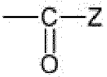 ist,
B⁴ = -V-W-Z oder 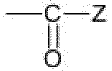 ist,
Q = -(CH₂)_{n"}- ist und
n, n', n", n'" und m jeweils unabhängig voneinander eine ganze Zahl ist, mit
n = 0-2,
n' = 0-4,
n" = 1-4,
n"' = 0-4 und
m = 8-30, bevorzugt 10-26, stärker bevorzugt 10-22,
mit mindestens einem nicht blockierten oder zumindest teilweise blockierten Di-, Tri- oder Polyisocyanat (IC), wobei der Anteil an freien Isocyanat (NCO)-Gruppen im Polyisocyanat (IC) zwischen 1,8 und 10 pro Mol liegt,
(2) mindestens ein Copolymer (C) umfassend mindestens einen Baustein der Formel 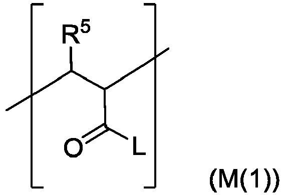 wobei
L = -O-R⁶, -NH-R⁶, 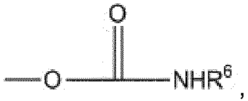 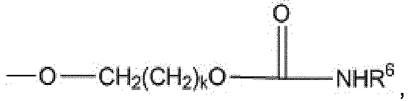 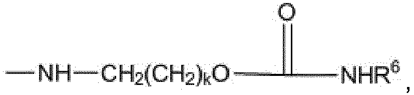 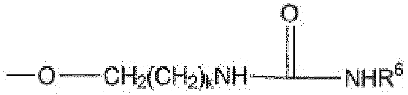 und/oder 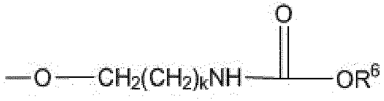 ist, 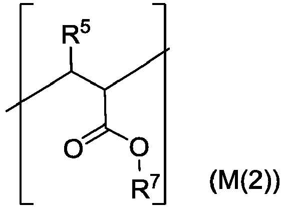 und/oder 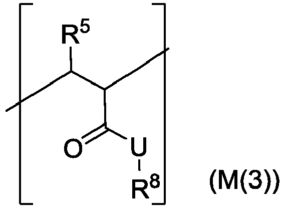 wobei
R⁵ -H oder -CH₃ ist,
R⁶ ein C₁₂-C₄₀-Kohlenwasserstoffrest ist,
R⁷ ein linearer oder verzweigter aliphatischer C₁-C₈-Kohlenwasserstoffrest ist,
U = -O- oder -NH- ist,
R⁸ = 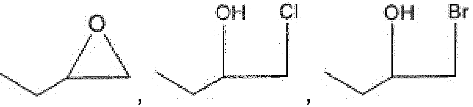 oder -CH₂-(CH₂)ₚ-OH ist,
und k und p jeweils unabhängig voneinander eine ganze Zahl ist mit
k = 1-5 und
p = 0-10.
(3) gegebenenfalls mindestens ein nicht blockiertes oder zumindest teilweise blockiertes Di-, Tri- oder Polyisocyanat (IC),
(4) gegebenenfalls Wasser und/oder mindestens ein organisches Lösungsmittel und
(5) gegebenenfalls mindestens eine oberflächenaktive Substanz.

2. Zubereitung (Z) nach Anspruch 1, wobei die Komponente (1) 10-90 Gew.-%, bevorzugt 20-80 Gew.-%, stärker bevorzugt 25-65 Gew.-%, bezogen auf die Gesamtzubereitung (Z) ausmacht
und/oder
die Komponente (2) 10-90 Gew.-%, bevorzugt 20-80 Gew.-%, stärker bevorzugt 30-70 Gew.-%, bezogen auf die Gesamtzubereitung (Z) ausmacht
und/oder
die Komponente (3) 0-50 Gew.-%, bevorzugt 5-35 Gew.-%, stärker bevorzugt 10-25 Gew.-%, bezogen auf die Gesamtzubereitung (Z) ausmacht
und/oder
die Komponente (4) 20-99,9 Gew.-%, bevorzugt 40-99,8 Gew.-%, stärker bevorzugt 50-99 Gew.-%, bezogen auf die Gesamtzubereitung (Z) ausmacht
und/oder
die Komponente (5) 0-20 Gew.-%, bevorzugt 1-20 Gew.-%, stärker bevorzugt 2-15 Gew.-%, bezogen auf die Gesamtmenge der Komponenten (1), (2) und ggf. (3) und/oder ggf. (5) ausmacht.

3. Zubereitung (Z) nach einem der vorhergehenden Ansprüche, wobei die Komponente (2) 30-90 Mol-%, bevorzugt 40-85 Mol-%, stärker bevorzugt 50-80 Mol-%, des Bausteins M(1) enthält
und/oder
die Komponente (2) 5-65 Mol-%, bevorzugt 10-55 Mol-%, stärker bevorzugt 16-49 Mol-%, des Bausteins M(2) enthält
und/oder
die Komponente (2) 0,1-8 Mol-%, bevorzugt 0,5-5 Mol-%, stärker bevorzugt 1-4 Mol-%, des Bausteins M(3) enthält.

4. Zubereitung (Z) nach einem der vorhergehenden Ansprüche, wobei für das Umsetzungsprodukt (S) das molare Verhältnis von freien Isocyanat (NCO)-Gruppen im Polyisocyanat (IC) zu Isocyanat-reaktiven Gruppen in Verbindung (A) auf 1:1 bis 1:1,3, bevorzugt 1 bis 1,1 eingestellt ist.

5. Zubereitung (Z) nach einem der vorhergehenden Ansprüche, wobei das Isocyanat (IC) ausgewählt ist aus der Gruppe bestehend aus 2,4-Toluylendiisocyanat, 2,4'-Diphenylmethandiisocyanat, 4,4'-Diphenylmethandiisocyanat (MDI), höherkettigen Homologen des Diphenylmethandiisocyanates (Polymer-MDI), 4-Methyl-cyclohexan-1,3-diisocyanat, Tetramethylendiisocyanat, Tetramethylendiisocyanat-Trimere, Hexamethylendiisocyanat, Hexamethylendiisocyanat-Trimere, Isophorondiisocyanat, Isophorondiisocyanat-Trimere, 2,2,4- oder 2,4,4-Trimethyl-1,6-hexamethylendiisocyanat, Dimerdiisocyanat und Mischungen, wie z.B. Mischungen aus MDI und Polymer-MDI, sowie Derivaten davon.

6. Zubereitung (Z) nach einem der vorhergehenden Ansprüche, wobei das organische Lösungsmittel gemäß Komponente (4) ausgewählt ist aus Estern, z.B. Ethylacetat, n-Propylacetat, Isopropylacetat, n-Butylacetat, Isobutylacetat oder Amylacetat, Ketonen, z.B. Aceton, Methylethylketon und gesättigten Kohlenwasserstoffen, wie z.B. n-Hexan, n-Heptan oder n-Oktan.

7. Zubereitung (Z) nach einem der Ansprüche 1-6, ferner umfassend mindestens ein Umsetzungsprodukt (CDI) erhältlich durch folgende Schritte
a) Bereitstellen mindestens eines Di-, Tri- oder Polyisocyanats (IC),
b) Umsetzen von (IC) mit mindestens einer organischen Verbindung (O), die mindestens eine Isocyanat-reaktive Gruppe enthält, wobei das molare Verhältnis von Isocyanatgruppen zu Isocyanat-reaktiven Gruppen auf 10:1 bis 3:2, bevorzugt 4:1 bis 2:1, eingestellt ist, und
c) Carbodiimidisieren der nach Schritt b) vorliegenden Produkte mit einem Katalysator bei Temperaturen von 25-150 °C, bevorzugt 40-100 °C.

8. Zubereitung (Z) nach einem der Ansprüche 1-6, ferner umfassend mindestens ein Umsetzungsprodukt (CDI), erhältlich durch folgende Schritte
a) Bereitstellen mindestens eines Di-, Tri- oder Polyisocyanats (IC),
b) Carbodiimidisieren von (IC) mit einem Katalysator bei Temperaturen von 25-150 °C, bevorzugt 40-100 °C, und
c) Umsetzen der nach Schritt b) vorliegenden Produkte mit mindestens einer organischen Verbindung (O), die mindestens eine Isocyanat-reaktive Gruppe enthält, wobei das molare Verhältnis von Isocyanatgruppen zu Isocyanat-reaktiven Gruppen auf ein Verhältnis von 1:1 eingestellt ist.

9. Zubereitung (Z) nach einem der Ansprüche 7-8, wobei die organische Verbindung (O) ausgewählt ist aus der Gruppe bestehend aus Monoamin, Monoalkohol, Diamin, Diol, Polyamin und Polyol, bevorzugt Monoamin, Monoalkohol, Diamin und Diol, insbesondere aus der Gruppe bestehend aus
R⁹-OH,
R⁹-NH₂,
HO-R¹⁰-OH und
H₂N-R¹⁰-NH₂, wobei
R⁹ ein gesättigter oder ungestättigter Kohlenwasserstoffrest mit 12-40 Kohlenstoffatomen ist, der gegebenenfalls mindestens eine Gruppe ausgewählt aus -CO-O-, -CO-, -CO-NH- und -O- enthalten kann und gegebenenfalls substituiert ist mit mindestens einer Polyalkylenoxid-, kationischen, anionischen und/oder amphoteren Gruppe, und
R¹⁰ ein gesättigter oder ungestättigter Kohlenwasserstoffrest mit 12-40 Kohlenstoffatomen ist, der gegebenenfalls mindestens eine Gruppe ausgewählt aus -CO-O-, -CO-, -CO-NH- und -O- enthalten kann und gegebenenfalls substituiert ist mit mindestens einer Polyalkylenoxid-, kationischen, anionischen und/oder amphoteren Gruppe.

10. Verwendung einer Zubereitung (Z) gemäß einem der Ansprüche 1-9 als Hydrophobierungsmittel, insbesondere auf Flächengebilden, insbesondere textilen Substraten, Papier, Leder und mineralischen Flächengebilden.

11. Verwendung der Zubereitung (Z) nach Anspruch 10 als Additiv in Farben, Lacken oder Putzen.

12. Verfahren zur Hydrophobierung von Substraten, umfassend Aufbringen der Zubereitung (Z) nach einem der Ansprüche 1-9 auf ein Substrat, bevorzugt ein Flächengebilde, stärker bevorzugt ein textiles Substrat, Papier, Leder oder mineralisches Substrat.

13. Verfahren nach Anspruch 12, wobei das Aufbringen mittels Sprühen, Tauchen, Tränken, Streichen oder durch Schwammauftrag erfolgt.

14. Verfahren nach Anspruch 12 oder 13, wobei die Zubereitung (Z) mittels Zwangsapplikation oder im Ausziehverfahren auf ein textiles Substrat aufgebracht wird.

15. Verfahren nach einem der Ansprüche 12 bis 14, wobei die Zubereitung (Z) auf ein bereits gewaschenes textiles Substrat aufgebracht wird.

## Claims

1. Preparation (Z), comprising
(1) at least one conversion product (S) obtainable by reacting at least one compound (A) of the formula 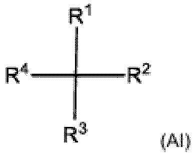 and/or 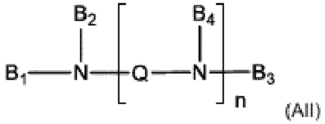
wherein R¹ is -X-Y-Z or -Z with
X = -(CH₂)_{n"}-,
Y = 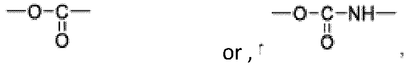
Z=-(CH₂)ₘ-CH₃,
R² is 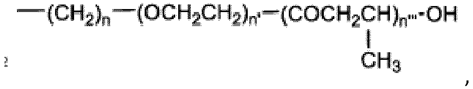
R³ is -X-Y-Z, -Z or -Y-Z, with the provision that in the case of the meaning of -Y-Z n is replaced by n" in residue R²,
R⁴ is -X-Y-Z or -(CH₂)_{n'}H,
B¹ is -V-W-Z or -Z, with
V = -(CH₂)_{n"}- or 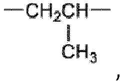
W = 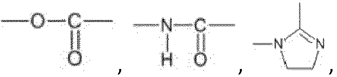 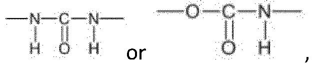
B² is -(CH₂)_{n"}-NH₂, or 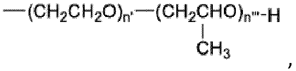
B³ is -V-W-Z, -Z or 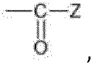
B⁴ is -V-W-Z or 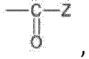
Q is -(CH₂)_{n"}- and
n, n', n", n'" and m are each independently an integer, with
n = 0-2,
n' = 0-4,
n" = 1-4,
n'" = 0-4 and
m = 8-30, preferably 10-26, more preferably 10-22,
with at least one unblocked or at least partially blocked di-, tri- or polyisocyanate (IC), wherein the proportion of free isocyanate (NCO) groups in the polyisocyanate (IC) is between 1.8 and 10 per mole,
(2) at least one copolymer (C) comprising at least one building block of the formula 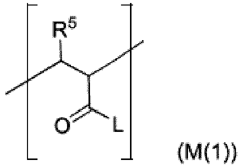 wherein
L is 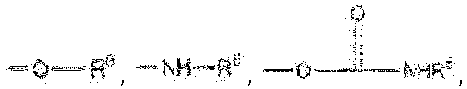 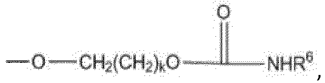 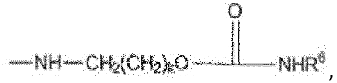 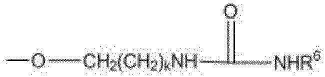 and/or 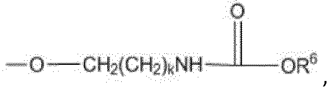 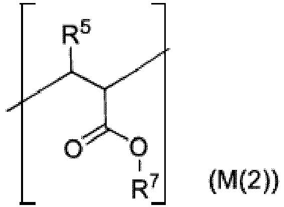 and/or 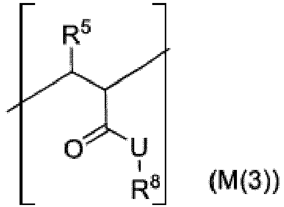 wherein
R⁵ is -H or -CH₃,
R⁶ is a C₁₂-C₄₀ hydrocarbon residue,
R⁷ is a linear or branched aliphatic C₁-C₈ hydrocarbon residue,
U is -O- or -NH-,
R⁸ is 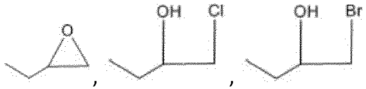 or -CH₂-(CH₂)ₚ-OH,
and k and p are each independently an integer with
k = 1-5 and
p = 0-10.
(3) optionally at least one unblocked or at least partially blocked di-, tri- or polyisocyanate (IC),
(4) optionally water and/or at least one organic solvent and
(5) optionally at least one surface-active substance

2. The preparation (Z) according to claim 1, wherein the component (1) accounts for 10-90 wt.%, preferably 20-80 wt.%, more preferably 25-65 wt.% relative to the total preparation (Z)
and/or
the component (2) accounts for 10-90 wt.%, preferably 20-80 wt.%, more preferably 30-70 wt.% relative to the total preparation (Z)
and/or
the component (3) accounts for 0-50 wt.%, preferably 5-35 wt.%, more preferably 10-25 wt.% relative to the total preparation (Z)
and/or
the component (4) accounts for 20-99.9 wt.%, preferably 40-99.8 wt.%, more preferably 50-99 wt.% relative to the total preparation (Z)
and/or
the component (5) accounts for 0-20 wt.%, preferably 1-20 wt.%, more preferably 2-15 wt.%, relative to the total amount of components (1), (2) and optionally (3) and/or optionally (5).

3. The preparation (Z) according to one of the preceding claims, wherein the component (2) contains 30-90 mol-%, preferably 40-85 mol-%, more preferably 50-80 mol-%, of the building block M(1)
and/or
the component (2) contains 5-65 mol%, preferably 10-55 mol%, more preferably 16-49 mol%, of the building block M(2)
and/or
the component (2) contains 0.1-8 mol%, preferably 0.5-5 mol%, more preferably 1-4 mol%, of the building block M(3).

4. The preparation (Z) according to one of the preceding claims, wherein for the conversion product (S) the molar ratio of free isocyanate (NCO) groups in the polyisocyanate (IC) to isocyanate-reactive groups in compound (A) is adjusted to 1:1 to 1:1.3, preferably 1 to 1.1.

5. The preparation (Z) according to one of the preceding claims, wherein the isocyanate (IC) is selected from the group consisting of 2,4-toluene diisocyanate, 2,4'-diphenylmethane diisocyanate, 4,4'-diphenylmethane diisocyanate (MDI), higher chain homologues of the diphenylmethane diisocyanate (polymer MDI), 4-methyl-cyclohexane-1,3-diisocyanate, tetramethylene diisocyanate, tetramethylene diisocyanate trimers, hexamethylene diisocyanate, hexamethylene diisocyanate trimers, isophorone diisocyanate, isophorone diisocyanate trimers, 2,2,4- or 2,4,4-trimethyl-1,6-hexamethylene diisocyanate, dimer diisocyanate and mixtures such as mixtures of MDI and polymer MDI, and derivatives thereof.

6. The preparation (Z) according to one of the preceding claims, wherein the organic solvent according to component (4) is selected from esters, e.g. ethyl acetate, n-propylacetate, isopropylacetate, n-butyl acetate, isobutyl acetate or amylacetate, ketones, e.g. acetone, methyl ethyl ketone and saturated hydrocarbons, such as n-hexane, n-heptane or n-octane.

7. The preparation (Z) according to any of Claims 1-6 further comprising at least one conversion product (CDI) obtainable by the following steps
a) Providing at least one di-, tri- or polyisocyanate (IC),
b) Reacting (IC) with at least one organic compound (O) which contains at least one isocyanate-reactive group, wherein the molar ratio of isocyanate groups to isocyanate-reactive groups is adjusted to 10:1 to 3:2, preferably 4:1 to 2:1, and
c) Carbodiimidizing the products present after step b) with a catalyst at temperatures of 25-150° C, preferably 40-100° C.

8. The preparation (Z) according to one of claims 1-6, further comprising at least one conversion product (CDI) obtainable by the following steps
a) Providing at least one di-, tri- or polyisocyanate (IC),
b) Carbodiimidizing of (IC) with a catalyst at temperatures of 25-150° C, preferably of 40-100° C; and
c) Reacting the products present after step b) with at least one organic compound (O) which contains at least one isocyanate-reactive group, wherein the molar ratio of isocyanate groups to isocyanate-reactive groups is adjusted to a ratio of 1:1.

9. The preparation (Z) according to any of claims 7-8, wherein the organic compound (O) is selected from the group consisting of monoamine, monoalcohol, diamine, diol, polyamine and polyol, preferably monoamine, monoalcohol, diamine and diol, in particular from the group consisting of
R⁹-OH,
R⁹-NH₂,
HO-R¹⁰-OH and
H₂N-R¹⁰-NH₂, wherein
R⁹ is a saturated or unsaturated hydrocarbon residue having 12-40 carbon atoms, which may optionally contain at least one group selected from -CO-O-, -CO-, -CO-NH- and -O- and is optionally substituted with at least one polyalkylene oxide, cationic, anionic and/or amphoteric group, and
R¹⁰ is a saturated or unsaturated hydrocarbon group residue having 12-40 carbon atoms which may optionally contain at least one group selected from -CO-O-, -CO-, -CO-NH- and -O- and is optionally substituted with at least one polyalkylene oxide, cationic, anionic and/or amphoteric group.

10. The use of a preparation (Z) according to one of the claims 1-9 as hydrophobing agent, particularly as a hydrophobing agent on fabrics, in particular textile substrates, paper, leather and mineral fabrics.

11. The use of the preparation (Z) according to claim 10 as additive in paints, varnishes or plasters.

12. A method for hydrophobizing substrates, comprising applying the preparation (Z) according to one of the claims 1-9 to a substrate, preferably a fabric, more preferably a textile substrate, paper, leather or mineral substrate.

13. The method according to claim 12, wherein the application is by spraying, dipping, impregnating, painting or sponge application.

14. The method according to claim 12 or 13, wherein the preparation (Z) is applied to a textile substrate by forced application or by the exhaust method.

15. The method according to one of claims 12 to 14, wherein the preparation (Z) is applied to an already washed textile substrate.

## Revendications

1. Préparation (Z), comprenant
(1) au moins un produit de réaction (S) pouvant être obtenu en faisant réagir au moins un composé (A) de formule 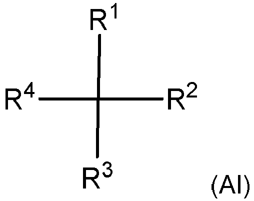 et/ou 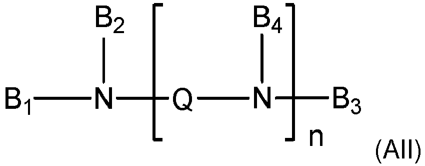
R¹ étant -X-Y-Z ou -Z avec
X = -(CH₂)_{n"}-,
Y = 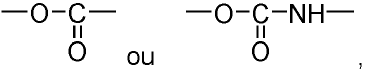
Z = -(CH₂)m-CH₃,
R² étant 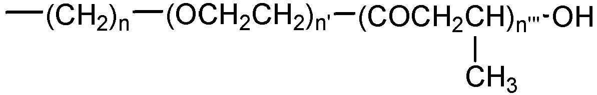
R³ étant -X-Y-Z, -Z ou -Y-Z, à condition que, dans le cas -Y-Z dans le résidu R² n soit remplacé par n",
R⁴ étant -X-Y-Z ou -(CH₂)_{n'}H,
B¹ étant -V-W-Z ou -Z, avec
V = -(CH₂)_{n"}- ou 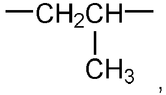
W = 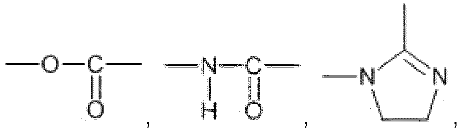 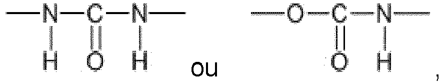
B² = -(CH₂)_{n"}-NH₂, ou 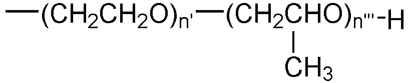
B³ = -V-W-Z, -Z ou 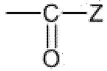
B⁴ = -V-W-Z ou , 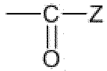
Q = -(CH₂)_{n"}- et
n, n', n", n'" et m étant chacun indépendamment un nombre entier, avec
n = 0-2,
n' = 0-4,
n" = 1-4,
n"' = 0-4, et
m = 8-30, de préférence 10-26, de manière plus préférée 10-22,
ayant au moins un di, tri ou polyisocyanate (IC) non bloqué ou au moins partiellement bloqué, la proportion de groupes isocyanate (NCO) libres dans le polyisocyanate (IC) étant comprise entre 1,8 et 10 par mole,
(2) au moins un copolymère (C) comprenant au moins un élément constitutif de formule 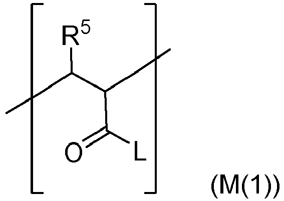 avec
L = -O-R⁶, -NH-R⁶, 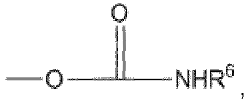 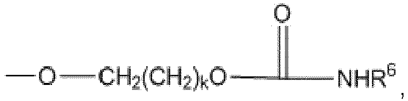 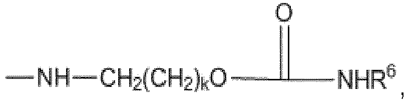 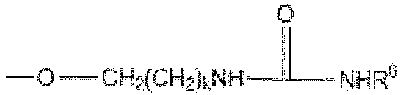 et/ou 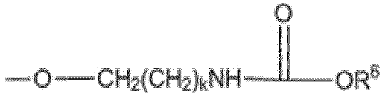 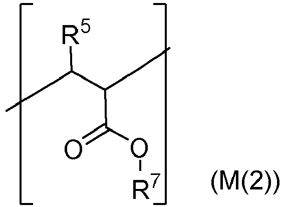 et/ou 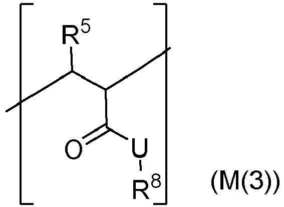 avec
R⁵ étant -H ou -CH₃,
R⁶ étant un résidu hydrocarboné en C₁₂-C₄₀,
R⁷ étant un résidu hydrocarboné aliphatique en C1-C8, linéaire ou ramifié,
U = -O- ou -NH-,
R⁸ = 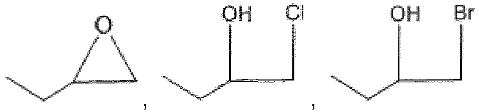 ou -CH₂-(CH₂)ₚ-OH,
et k et p étant chacun indépendamment un nombre entier avec
k = 1-5 et
p = 0-10.
(3) éventuellement au moins un di-, tri- ou polyisocyanate non bloqué ou au moins partiellement bloqué (IC),
(4) éventuellement de l'eau et/ou au moins un solvant organique et
(5) éventuellement au moins une substance tensioactive.

2. Préparation (Z) selon la revendication 1, dans laquelle le composant (1) constitue 10-90 % en poids, de préférence 20-80% en poids, de manière plus préférée 25-65% en poids, par rapport à la préparation totale (Z) et/ou
le composant (2) constitue 10-90 % en poids, de préférence 20-80% en poids, de manière plus préférée 30-70% en poids, par rapport à la préparation totale (Z)
et/ou
le composant (3) constitue 0-50 % en poids, de préférence 5-35 % en poids, de manière plus préférée 10-25 % en poids, par rapport à la préparation totale (Z)
et/ou
le composant (4) constitue 20-99,9 % en poids, de préférence 40-99,8 % en poids, de manière plus préférée 50-99 % en poids, de la préparation totale (Z)
et/ou
le composant (5) constitue 0-20 % en poids, de préférence 1-20 % en poids, de manière plus préférée 2-15 % en poids, par rapport à la quantité totale des composants (1), (2) et éventuellement (3) et/ou éventuellement (5).

3. Préparation (Z) selon l'une des revendications précédentes, dans laquelle le composant (2) contient 30 à 90 % en moles, de préférence 40 à 85 % en moles, de manière plus préférée 50 à 80 % en moles, de l'élément constitutif M(1)
et/ou
le composant (2) contient 5 à 65 % en moles, de préférence 10 à 55 % en moles, de manière plus préférée 16 à 49 % en moles, de l'élément constitutif M(2)
et/ou
le composant (2) contient 0,1 à 8 % en moles, de préférence 0,5 à 5 % en moles, de manière plus préférée 1 à 4 % en moles, de l'élément constitutif M(3).

4. Préparation (Z) selon l'une des revendications précédentes, dans laquelle, pour le produit de réaction (S), le rapport molaire des groupes isocyanate (NCO) libres dans le polyisocyanate (IC) aux groupes réactifs avec les isocyanates dans le composé (A) est ajusté à 1:1 à 1:1,3, de préférence 1 à 1,1.

5. Préparation (Z) selon l'une des revendications précédentes, dans laquelle l'isocyanate (IC) est choisi dans le groupe constitué par le 2,4-tolylène diisocyanate, le 2,4'-diphénylméthane diisocyanate, le 4,4'-diphénylméthane diisocyanate (MDI), les homologues à chaîne supérieure du diphénylméthane diisocyanate (MDI polymère), 4-méthyl-cyclohexane-1,3-diisocyanate, tétraméthylène diisocyanate, trimères de tétraméthylène diisocyanate, hexaméthylène diisocyanate, trimères d'hexaméthylène diisocyanate, isophorone diisocyanate, trimères d'isophorone diisocyanate, 2,2,4- ou 2,4,4-triméthyl-1,6-hexaméthylène diisocyanate, diisocyanate dimère et mélanges tels que les mélanges de MDI et de MDI polymère, et leurs dérivés.

6. Préparation (Z) selon l'une des revendications précédentes, dans laquelle le solvant organique selon le composant (4) est choisi parmi les esters, par exemple l'acétate d'éthyle, l'acétate de n-propyle, l'acétate d'isopropyle, l'acétate de n-butyle, l'acétate d'isobutyle ou l'acétate d'amyle, les cétones, par exemple l'acétone, la méthyléthylcétone et les hydrocarbures saturés, tels que le n-hexane, le n-heptane ou le n-octane.

7. Préparation (Z) selon l'une quelconque des revendications 1 à 6, comprenant en outre au moins un produit de réaction (CDI) pouvant être obtenu par les étapes suivantes
a) fournir au moins un di-, tri- ou polyisocyanate (IC)
b) la réaction (IC) avec au moins un composé organique (O) contenant au moins un groupe réactif avec les isocyanates, le rapport molaire des groupes isocyanate aux groupes réactifs avec les isocyanates étant ajusté à 10:1 à 3:2, de préférence 4:1 à 2:1, et
c) carbodiimidiser des produits présents après l'étape b) avec un catalyseur à des températures de 25-150 °C, de préférence 40-100 °C.

8. Préparation (Z) selon l'une quelconque des revendications 1-6, comprenant en outre au moins un produit de réaction (CDI) pouvant être obtenu par les étapes suivantes
a) fournir au moins un di-, tri- ou polyisocyanate (IC)
b) carbodiimidiser du (IC) avec un catalyseur à des températures de 25 à 150 °C, de préférence de 40 à 100 °C, et
c) la réaction des produits présents après l'étape b) avec au moins un composé organique (O) contenant au moins un groupe réactif avec les isocyanates, le rapport molaire des groupes isocyanate aux groupes réactifs avec les isocyanates étant ajusté à un rapport de 1:1.

9. Préparation (Z) selon l'une des revendications 7-8, dans laquelle le composé organique (O) est choisi dans le groupe constitué par la monoamine, le monoalcool, la diamine, le diol, la polyamine et le polyol, de préférence la monoamine, le monoalcool, la diamine et le diol, en particulier dans le groupe constitué par
R⁹-OH,
R⁹-NH₂,
HO-R¹⁰-OH et
H₂N-R¹⁰-NH₂, où
R9 est un résidu hydrocarboné saturé ou insaturé ayant 12-40 atomes de carbone, qui peut éventuellement contenir au moins un groupe choisi parmi CO-O-, -CO-, -CO-NH- et -O- et est éventuellement substitué par au moins un groupe poly(oxyde d'alkylène), cationique, anionique et/ou amphotère, et R¹⁰ est un résidu hydrocarboné saturé ou insaturé ayant 12-40 atomes de carbone, qui peut éventuellement contenir au moins un groupe choisi parmi CO-O-, -CO-, -CO-NH- et -O- et est éventuellement substitué par au moins un groupe poly(oxyde d'alkylène), cationique, anionique et/ou amphotère.

10. Utilisation d'une préparation (Z) selon l'une quelconque des revendications 1-9 comme agent de hydrofugation, en particulier sur des matériaux en feuilles, notamment des substrats textiles, du papier, du cuir et des matériaux en feuilles minéraux.

11. Utilisation de la préparation (Z) selon la revendication 10 comme additif dans les peintures, vernis ou enduit.

12. Procédé de hydrofugation de substrats, comprenant l'application de la préparation (Z) selon l'une quelconque des revendications 1 à 9 sur un substrat, de préférence un matériau en feuille, de manière plus préférée un substrat textile, du papier, du cuir ou un substrat minéral.

13. Procédé selon la revendication 12, dans lequel l'application est effectuée par pulvérisation, immersion, trempage, peinture ou application à l'éponge.

14. Procédé selon les revendications 12 ou 13, dans lequel la préparation (Z) est appliquée sur un substrat textile au moyen d'une application forcée ou par le procédé d'épuisement.

15. Procédé selon l'une quelconque des revendications 12 à 14, dans lequel la préparation (Z) est appliquée sur un substrat textile déjà lavé.
